# EUROPEAN PATENT SPECIFICATION

(11) **EP 2 609 805 B1**
(45) Date of publication and mention of the grant of the patent: **30.05.2018**
(21) Application number: 13161114.7
(22) Date of filing: 24.11.2009
(51) Int. Cl.: A01K 1/00

(54) **A ventilation duct system and a method for minimizing air pollution in and/or around an animal habitat structure**
Belüftungskanalsystem und Verfahren zur Minimierung der Luftverschmutzung in und/oder um eine Tierhabitatstruktur
Système de conduit de ventilation et procédé permettant de réduire au minimum la pollution de l'air dans et/ou autour d'une structure d'habitat animal

(30) Priority: 24.11.2008 DK 200801659; 13.08.2009 DK 200900926; 20.11.2009 DK 200901231
(43) Date of publication of application: 03.07.2013
(62) Divisional of application: 09774948.5
(73) Proprietor: AgriFarm Innovation ApS, 8830 Tjele (DK)
(72) Inventor: Friis Pedersen, Erling, 8860 Ulstrup (DK)
(74) Representative: Awapatent A/S

(56) References cited:
- DE-A1- 2 437 512
- DE-B- 1 679 522
- NL-C- 1 006 238

## Description

The present invention relates to a ventilation duct system for minimizing air pollution in and/or around an animal habitat structure with at least one animal habitat surface, and comprises waste receiving means configured for receiving waste from and/or through at least a part of the at last one animal habitat surface.

Traditionally in animal husbandry the dimensioning of the building limits the possibilities for alternative stable designs. The limitations are due to the need for good ventilation and removal of waste gasses in the stable rooms, which with the use of traditional ventilation systems, is difficult and expensive to perform in large stable structures.

Due to animal health and safety, as well as for practical reasons, so that animals do not rest and move around in their own waste, it is often desired to use slatted floors in at least part of the stable building. Underneath the slatted floors are waste reception ducts for receiving the waste falling through the slatted floor. As the waste is e.g. slurry or manure, it will release waste gases as ammonia, which are poisonous and not healthy to breathe in. These gasses will diffuse into the stable room where they will be hazardous to the livestock and to the personnel. Furthermore, the gases will enter the natural surroundings to the stable, creating a negative and unwanted environmental effect.

British patent document GB 1470793 discloses a ventilation system for livestock houses, which attempts to avoid the ammonia problems in stables for e.g. swine. The livestock house comprises a drainage duct and an elongated fodder distribution zone, in relation to which fresh air is being supplied to the livestock. It also comprises an elongated exhaust duct running along the sidewall of the house. The exhaust duct has adjustable holes for receiving contaminated air, which is sucked in through the holes. The exhaust duct is also in communication with the drainage duct in selected points. This way a forced flow from the air inlets across the animal living area to the exhaust duct is created. The construction of the ventilation system requires a very intense suction in the exhaust duct in order to be able to remove significant amounts of ammonia, however it is known that the exhaust in most cases will not be sufficient to comply with health regulations and regulations on animal welfare and exhaust from stable buildings. It also restricts the design possibilities of the stables considerably, as the exhaust is along the sidewalls of the buildings. Moreover, due to the forced flow, the air outlets must be within a certain maximum distance from the exhaust. Furthermore, this design allows only for a very small open area between drainage ducts and stable room if the waste gasses are not to diffuse from the drainage duct into the area around the animals, and thus slatted floors cannot be used in the known livestock house due to the limitations of the ventilation system.

Ventilation systems for stable buildings are furthermore disclosed in DE 24 37 512 A1, upon which the preamble of claim 1 is based. DE 24 37 512 A1 discloses regulating means for regulating natural ventilation located away from the waste receiving means and adapted to control airflow in the animal habitat structure. Furthermore, NL-C-1006238 also discloses ventilations systems for stable buildings.

Ventilation systems, which put unnecessary and unpractical often expensive limitations on design of the stable buildings, hinders the development of infrastructure and operation of new stable structures, and thereby hinders the farmers' possibility for new thinking on design and conceptual strategies to the advantage for animal welfare, economy and environment.

Thus there is a need for a new type of ventilation system, which can ventilate a wide range of stable rooms independent of room size and shape, and which enables the use of slatted floors in the stables. Accordingly, known ventilation systems for use in farm holding need improvement or replacement to minimize release of CO₂, save energy, and improve air quality in the stable room.

In a first aspect of the present invention is provided a ventilation duct system of the kind mentioned in the opening paragraph, which enables the use of slatted floors in stable buildings without the usual problems with waste gas pollution of the indoor and outdoor environment.

In a second aspect of the present invention is provided a ventilation duct system of the kind mentioned in the opening paragraph, which can be used in open and closed stable structures.

In a third aspect of the present invention is provided a ventilation duct system of the kind mentioned in the opening paragraph, which can be operated on the basis of multiple measurements of air quality and physical conditions at any time in and around the stable structure.

In a fourth aspect of the present invention is provided a ventilation duct system of the kind mentioned in the opening paragraph, which can be operated on the basis of multiple measurements of air quality, air properties, environmental conditions and physical conditions to minimize energy consumption.

In a fifth aspect of the present invention is provided a ventilation duct system of the kind mentioned in the opening paragraph, which can be operated on the basis of multiple measurements of air quality, air properties, environmental conditions and physical conditions to greatly improve the welfare of the livestock and personnel.

In a sixth aspect of the present invention is provided an improved method for minimizing pollution in an animal habitat structure, such as a stable structure.

In a seventh aspect of the present invention is provided an improved method for minimizing pollution in an animal habitat structure using less energy and releasing less CO₂ than known methods.

In an eighth aspect of the present invention is provided an improved method for minimizing pollution from an animal habitat structure, which method can be controlled according to inside or outside environmental conditions.

In a ninth aspect of the present invention is provided an improved method for minimizing pollution in an animal habitat structure, which method can be controlled locally or centrally.

In a tenth aspect of the present invention is provided a ventilation duct system and method for minimizing pollution enabling improved control of distribution of animal released pollutions inside and outside an animal habitat structure.

In the present application "clean air" is used for air, which as a minimum is breathable for humans and animals without any health risk or discomforts. "Clean air" also includes air, which has been treated to contain a minimum of additional particles as pollen, dust etc. Further "clean air" comprises air satisfying the above, which also has been added an additive. "Clean air" includes fresh air from the natural surroundings to the animal habitat structure as well as cleaned polluted air complying with these requirements.

The novel and unique features whereby these and further aspects are achieved according to the present invention are defined in claim 1.

The air pressure gradient creates an air stream across the width of the waste receiving means. This air stream serves as an air curtain preventing waste gasses from the waste receiving means from entering the animal habitat area and gently draws potential gaseous pollutions down into the waste receiving means. The air pressure gradient can be induced simply by e.g. the naturally occurring air pressure difference, which almost always exists between two sides of a building or corresponding compartment.

The ventilation duct system according to the present invention takes part in the overall ventilation of the animal habitat structure. Thus ventilation in the animal habitat structure is achieved at least partly by the ventilation duct system below the at least one animal habitat surface and partly by a coexisting conventional ventilation system now incorporated in the ventilation duct system. E.g. part of the air with the majority of the waste gases can be removed through the waste reception means and the second air duct, and part of the air can be exchanged by e.g. natural ventilation as often used in cow stables. The means for ventilation through the waste reception means and the second air duct as well as the means for regulating the natural ventilation can be operated in a coordinated scheme to ensure the best possible ventilation while at the same time being energy efficient and thus minimizing energy consumption and for example CO₂ emission.

The regulating means can be selected from the group comprising ventilators, fans, dampers, gates, heaters, coolers, humidifiers, and dehumidifiers and chosen depending on the location and specific use.

If the waste receiving means comprises at least one first opening in the first long side of the waste receiving means, and at least one second opening in the opposing second long side of the waste receiving means, the air gradient across the width of the waste receiving means, and thus the air curtain, can be arranged inside the waste reception means in contrast to over or outside the waste reception means. The position inside the waste receiving means helps minimize the escape of waste gasses even further. The air pressure gradient will then be established from the at least one first opening to the at least one second opening.

Advantageously the ventilation duct system can further comprise a first air duct with a first inlet end and an opposite first outlet end, and at least one first ventilation hole for at least gaseous communication with at least the at least one first opening in the waste receiving means, and optionally a second air duct with a second inlet end and a second outlet end, at least one second ventilation hole for at least gaseous communication with at least the at least one second opening in the waste receiving means. This arrangement serves to improve control of at least one of the direction of the airflow, the airflow speed and/or the amount of air to and from the waste reception means, thus to control the air curtain, including the efficiency of the air curtain.

When a first air pressure of a first airflow in the first air duct is higher than a second air pressure of a second airflow in the second air duct, and the second air pressure is lower than a global ambient pressure or lower than at least one local ambient pressure in the animal habitat structure, air will be sucked into the second air duct from the first air duct and from the animal habitat structure. The first airflow from the first air duct and animal habitat area to the second air duct creates the air curtain as well as it helps exhaust waste gasses from the animal habitat area in the vicinity of the waste reception means. This combined air curtain and suction from the animal habitat area provides a very efficient removal of the waste gases from the animal habitat area and thus provides a high air quality beneficial for both animals and staff in the general animal habitat structure as well as the local animal habitat area.

Advantageously the first air pressure is higher than the air pressure in the waste reception means, i.e. air is blown into the waste reception means from the first air duct. The inventors have surprisingly discovered that the inlet of air from the first air duct into the waste reception means helps minimize the ammonia concentrations in and around the animal habitat structure even further compared to animal habitat structures without the inventive ventilation duct system.

The ventilation duct system can further comprise first means for supplying fresh air to and/or discharging polluted air from the first air duct and/or second means for supplying fresh air to or discharging polluted air from the second air duct in order to secure a constant, reliable and/or pre-selected air pressure gradient across the waste reception means.

Advantageously any of the first means or the second means for supplying fresh air to and/or discharging polluted air to respective first air duct and second air duct can be a pumping means, a suction means or a blower means, as these means are inexpensive commercially available means, which are easy to replace in case of malfunction, and to regulate and adjust to easily control both air pressure and airflow. For example, the first means or the second means can be a fan or ventilator, but any other similar means are intended within the scope of the present invention.

Any of the first means or the second means may be situated inside the respective first duct and second duct, in proximity to an end of an air duct or remote from the air duct in order to have easy access to said means in case of repair or replacement. Depending on the placement of the first means or the second means, said means can expediently be used for either sucking or blowing air inside the first or second air duct. Varying for example the rotation velocity and/or the angle of the fan can thus vary the airflow speed as well as the air pressure inside the first and second ducts.

An effective air curtain is achieved when the airflow speed across the width of the waste reception means is 0.3 - 0.8 m/s. At these air speeds the air curtain minimizes the spill of waste gasses into the animal habitat area. Very importantly the overall energy consumption in general for operating the animal habitat structure, including operating the means creating the pressure gradient, is considerably minimized as well, due to the efficiency and utilization coefficient of the air curtain at this preferred interval of airflow speed.

Optimally, the ventilation volume through the ventilation duct system may be 10 - 60% of a total ventilation volume of the animal habitat structure, as the release of waste gasses to the animal habitat structure and/or the surroundings outside the animal habitat structure in this way can be kept at a level which may comply with e.g. the environment regulations inside and outside the animal habitat structure. The known reluctance to reside close to smell-releasing animal habitat structures, as well as staying and working inside the animal habitat structures, is eliminated, since at the above level of air replacement and cleaning of air all inconveniencies can be alleviated.

The ventilation volume through the ventilation ducts is defined as m³ air/animal/hour removed out through the waste reception means and second air duct. The total ventilation volume is defined as m³ air/animal/hour removed through all the ventilation means, e.g. through the second air duct and by natural ventilation together. Exemplary values in a cow barn can be a total ventilation volume of 480 m³ air/cow/hour and a ventilation volume through the ventilation ducts of 100 - 180 m³ air/cow/hour.

When the ventilation volume through the waste reception means and second air duct is 20 - 45% of the total ventilation volume of the animal habitat structure, the ammonia emission can be even further decreased, e.g. decreased by up to 90% which is sufficient in by far the most cases to not only comply with environment regulations, but also be well within the compulsory limits.

The preferred animal habitat structure is a stable structure, or a section of a stable structure, such as a box for pigs or cattle, a cage, a chicken run or other similar structure where animal is breed or lives.

To be able to control the quality of air going into the first and second air ducts, as well as leaving the first and second air ducts, the first inlet, second inlet, first outlet and/or second outlet can be in communication with air treatment means. For example, rough filters, for preventing the entry of small animals, leaves, or other course components, and fine filters for avoiding pollen, dust and other kinds of fine particles in the incoming air, can be mounted where air is sucked into the first air duct. Where air, polluted with waste gases, leaves the second air duct, chemical or mechanical filters or combinations of these kinds of filters, can be mounted for example for removing ammonia and methane, to ensure that the air is cleaned from pollutants before it enters the outside environment or a central air reservoir.

Accordingly, air treatment means can be chosen from the group comprising mechanical filters, chemical filters, wet filters and/or means for conditioning the air with an additive, or combinations of these. All such filter types can be used to reduce specific pollutants in the airflow or ventilation volume to advantageous and/or desired concentration. The person skilled in the art will recognize the best filter or combination of filters to use for a given situation and task.

The preferred additive to the air can be selected from e.g. 02, H20, odour control compounds, dust compression compounds, and/or medicaments for inhaling by the animal. This list is not exhaustive.

In some situations, the ventilation duct system advantageously can comprise means for re-circulation of the air in the first air duct and/or the second air duct. A recirculation system can be an advantage for example where the outside temperature is very low. If very cold air continuously is sucked in through the first air ducts underneath the animal habitat surfaces it can create a cold and unpleasant environment for the livestock in the animal habitat areas of the animal habitat structure. If air is recirculated it can either be heated by heating means or by the room temperature in the animal habitat areas and waste reception means, and thus add to a better living and working environment as the airflow will not cool the animal habitat surfaces. Also, e.g. recycling air locally may reduce energy consumption in that recirculation provides the possibility of switching off or just regulating temporarily operation of any of the first means or the second means for supplying fresh, clean air or for discharging polluted air.

A recycling cycle can for example be as follows: Clean air runs through a first air duct, across the waste reception means and into a second air duct. The airflow in the second air duct transports the now contaminated air along the length direction of the second air duct and into and through air treatments means for removing pollutants and bringing the air to a condition where it preferably is breathable for humans and animals without any health risks or discomfort. After passing through the filter means the air is now clean and it is hereafter recycled into the first air duct.

The cross section of the waste reception duct, the first and/or second air ducts can be substantially rectangular, oval, circular, or just chosen to meet specific needs or structural conditions in and/or under the animal habitat structure. The cross sections of said ducts may be the same or different depending for example on amount of available space underneath the animal habitat surface, the dimensions and shape of said space, restrictions and limitation due structural features of the animal habitat structure and ventilation installations, and requirements to be complied with for adequate exchange of air, regulations to be met for discharging or recycling air, as well as suitable cross sectional areas of ducts are the cross sectional areas that provide the best air pressure gradient and the best air curtain for a specific configuration and design of animal habitat structures and the demand for ventilation at any time in any animal habitat structures.

Advantageously the cross section of the first and/or second air ducts can be reduced from the first or second inlet ends towards the opposing first or second outlet ends, respectively, or vice versa. By using tapered air ducts, it may be possible to maintain a sufficient and effective airflow speed and air pressure along the whole length of the first and/or second air duct even when long air ducts are used.

When using conventional known air ducts with a constant cross-sectional area along the length, the degree of freedom of structural design of an effectively ventilated animal habitat structure, may in some embodiments be restricted, since the air ducts can only be of a limited length due to air pressure loss along the length of said conventional known air ducts. With the tapered air duct design, it is possible to have even very long air ducts, and thus long and/or broad animal habitat structures in which a high air quality is maintained throughout the animal habitat area, increasing animal welfare and working environment for personnel.

In particular, the cross section of the first air duct can be reduced in direction from the first air ducts first inlet end towards the first air ducts first outlet end and/or the cross section of the second air duct can be reduced in direction from the second air ducts second outlet end towards the second air ducts second inlet end in order to achieve maximum advantage of the above described airflow maintained throughout the full length of the first and second air ducts.

When the tapered first and second air duct have a common wall, a practical and compact air duct unit for use in the ventilation duct system can be achieved. The compact air duct unit is easy to transport and install, and can be used in many different animal habitat structure arrangements.

At least one of the first inlet end, second inlet end, first outlet end, or second outlet end can be blinded, for example the first outlet end of the first air duct and the second inlet of the second air duct can be blinded to help ensure the first and second air pressure needed in the first and second air ducts in order to obtain and maintain the desired air pressure gradient across the waste reception means. When e.g. the first outlet end of the first air duct is blinded it decreases the power with which the air needs to be introduced into the first air duct, compared to a situation with an open first outlet end. Decreased power consumption is an environmental and economical advantage, as well as it can help reduce problems with noise in or around the animal habitat structures.

Clean air can be pumped, sucked or blown from a reservoir along the length direction of the first air duct and/or the second air duct by means of the first means and/or the second means for supplying fresh air through the first inlet and/or the second inlet. Air from the second air duct(s), which air has been cleaned, can be let into a central reservoir from where it can be pumped, sucked or blown into the first air duct and thus creating a fully or partly recirculation system. The air can also be taken in from free surroundings, in which case the reservoir is the surroundings of the animal habitat structure.

The ventilation duct system can further comprise regulating means located in the first air duct, second air duct and/or waste receiving means. These regulating means may be used to further control e.g. airflow in the animal habitat structure and/or in the air duct and/or waste receiving means in order to obtain the best possible ventilation, ensuring minimum pollution of animal habitat area and/or surroundings while at the same time the energy consumption of the system can be controlled.

The regulating means can be selected from the group comprising ventilators, fans, dampers, gates, heaters, coolers, humidifiers, and dehumidifiers and chosen depending on the location and specific use.

The ventilation duct system further comprises detection means located in or away from the first air duct, second air duct and/or waste receiving means. The detection means are used to constantly monitor the air quality and physical conditions in multiple sections of the animal habitat structure as well as in the immediate surroundings. The measurement data thus provided are used as input for managing at least the regulation means to obtain best possible ventilation and best possible reductions of waste gasses in and around the animal habitat structure.

When at least some of the detection means are located outside the animal habitat structure it provides the possibility for constantly or in intervals monitoring the air quality outside to ensure that the ventilation duct system is functioning as expected. Outside detecting means can also provide information about weather conditions relevant for the operation of the ventilation duct system, such as wind speed or temperature, status and operational speed of the pumps, fans, gates etc., controlling airflow, so that ventilation in the animal habitat structure, air ducts and/or waste reception means can be adjusted accordingly.

The detection means may for example be selected from the group comprising temperature sensors, humidity sensors, anemometers, light sensors, fire and/or gas sensors as all of these can provide data which are important to know but often laborious to obtain.

The airflow, air pressure and/or air quality in the first and/or second air duct can be regulated by means of at least the regulating means, the means for pumping, sucking or blowing and/or the air treatment means to e.g. manage the air pressure gradient across the width of the waste reception means. More means for pumping, sucking or blowing can be inserted in different positions in the systems to optimize the operation, in that the pumping, sucking or blowing effect can be enhanced in selected areas if it is considered necessary. The coupling in and coupling out can be centrally controlled manually or automatically. To be able to control not only the airflow in the animal habitat structure or specific animal habitat areas, but also the airflows in the first and second air ducts by different means, is an advantage as it provides the possibility of controlled regulation of airflows to remove various and fluctuating levels of waste gases efficiently, and at the same time optimizing energy consumption by means of the many regulating options.

The contaminated air exhausted through the waste reception duct and the second air duct can be a sub-volume of the total air volume of the animal habitat structure, which offers the possibility of choosing to let a part of the air being exhausted or introduced at other points of the room of the animal habitat structure, for example beneath the roof or in areas with especially heavy contamination of the air.

The ventilation can take place continuously, in pre-selected intervals or at a predetermined time, optionally in a user defined time interval. This means that it is possible to ventilate when it is needed. For example, the ventilation can be turned off in periods where an area is emptied of animals, as well as the ventilation can be intensified in periods with a large demand, e.g. if it is very hot or highly contaminated in the animal habitat structure, or if it for any other reason is necessary. When the ventilation can be regulated to meet such demands, it is possible to save resources, which otherwise imply an economical strain on the farmer as well as being an environmental problem.

In a preferred embodiment the detecting means, the regulation means, the pumping means, suction means, blower means and/or the air treatment means can be coupled to a central data unit providing the possibility for monitoring and/or controlling the different parts of the ventilation duct system and/or animal habitat structure from one location. A central data unit can provide a fast overview of current operating status to the personnel working in the animal habitat structure, and thus contributes in saving time normally spend on performing manual control of the operation of conventional ventilations system. The central data unit also minimizes the risk of unnoticed failures, which can be fatal to the livestock in the animal habitat structure or to the surrounding environment.

The central data unit may advantageously have
- means for registering measurements from the detection means,
- means for calculating the best operation parameters of the regulating means, pumping means, suction means, blower means and/or the treatment means based on said measurements for a required mode of operation,
- means for executing the regulation of the regulating means, treatment means and/or the pumping means, suction means, blower means, and/or
- means for communicating data on measurements from a weather station and/or the detection means, and on the operation of the regulating means, treatment means and/or the pumping means, suction means, blower means to one or more local data units.

Such a central data unit makes it possible to maintain a constant high level of control of physical factors as temperature, waste gas levels, CO₂ levels in as many locations inside and outside the animal habitat structure as wanted and relevant at any given time. It is also possible to adjust, automatically or manually, any means necessary to keep the temperature, air quality etc. within desired levels and intervals. All or selected information on measurements can be transmitted to one or more local data units in order to e.g. warn personnel that the contamination level in emitted air is too high, or that the temperature in a stable section, e.g. with piglets, are too low. Actions can be taken by the warned personnel, either for example by actually changing a filter or a heating lamp, or by choosing new settings for e.g. the airflow in the second air duct, in order to up the air pressure gradient in the waste reception means, and transferring the new settings to the central data unit via the local data unit, in order for the central data unit to adjust the relevant means as necessary. The information sent to a specific person can be in any predefined language, and can e.g. include various information of the type of alarm, location, needed spare parts for repair, etc.

The central data unit may further be in communication with at least one of the means for providing for example light, food, water, and the like in the animal habitat structure in order to be able to handle and monitor even more of the functions important to keeping the animals healthy from central hold.

Animal habitat structures in which the ventilation duct system according to the present invention can be used include, but are not limited to, animal habitat structures designed for animal husbandry, especially for cattle, swine, sheep and/or poultry, but also fur farming is contemplated within the scope of the present invention.

Advantageously at least one of the treatment means are shared by at least two ventilation duct systems, e.g. if some or all of the second air ducts lead the polluted air from the waste reception ducts to a common filter system. The advantage of such a common filter system is for example that the personnel in the animal habitat structure has to overview and maintain fewer filter sites reducing cost and risk of filter failure.

The needed number of air treatment elements can be positioned in the actual ventilation duct system or in the inlets and/or outlets of the ventilations duct system. The air treatment means can thus be positioned where it is most advantageous.

In an alternative embodiment the waste reception means and/or the first air duct and/or the second air duct can be brought in fluid communication via pipes between the first and/or second air openings and/or first and second air holes so that the fluid communication between waste reception ducts and the first and/or second air duct does not depend on the distance between these. This alternative embodiment provides the possibility of variation of the design of the waste reception means, first and second air ducts and of the first and/or second air openings and/or first and second air holes, and thus freedom and flexibility to design, structure and create the ideal animal habitat section for a given need and a given task.

The ventilation duct system is ideal for use when keeping a variety of animals. The animal habitat structure can be a stable structure, or a section of a stable structure. Modern stables are often divided into sections with different functions, and the ventilation duct system according to the present invention can be customized to fulfil the needs in different types of stable sections or overall stable structures, either conventional stable structures or the novel stable structure described below and in the applicants co-pending International patent application no. PCT/IB2009/055315, published as WO-A-2010/058383.

A stable structure can be designed for the animal husbandry exemplified above. Even though these types of animals require very different stable structures the present ventilation duct system can be configured to meet the very different needs in e.g. a dairy farm and a mink farm.

The present invention further relates to a method for minimizing air pollution in and/or around an animal habitat structure with at least one animal habitat surface and waste receiving means configured for receiving waste from and/or through at least a part of the at last one animal habitat surface.

The method comprises the steps as listed in claim 11.

The airflow, generating the air curtain across the waste reception means, can to a large degree be managed by adjusting the airflow, air speed and air pressure in the second air duct. If the second pressure in the second duct is very low relative to the first pressure in the first air duct and to the ambient pressure in the animal habitat area above the animal habit surface close to waste reception means, a high-speed airflow across the width of, and preferably along the entire length of the waste reception means is expediently achieved. If the pressure difference between the second air duct and the first air duct and ambient pressure is not so large, the speed of the airflow will be less than in the above case. Regulating e.g. the speed of the airflow or regulating the air volume in the airflow regulates the amount of waste gases removed from the waste reception means and from the near animal habitat area in a very simple manner.

It is also possible to create a suitable first airflow and a first air pressure in the first air duct by means of at least some of the pumping means, suction means, blower means and/or the regulation means. Controlling the first airflow and a first air pressure in the first air duct, instead of depending of an unaided, at any time available airflow, enables even further control of the parameters, such as speed, volume, etc., of the air curtain and thereby provides enhanced control of the removal of waste gasses from the waste reception means and from the near animal habitat area. Enhanced control of the waste gases is directly beneficial to the environment inside and outside the animal habitat structure.

When the method further comprises
- measuring at least one of the parameters selected from the group comprising temperatures, air pressures, gas concentrations, local temperatures, air pressures at one or more locations, and
- regulating the operation of the regulating means, air treatment means, pumping means, suction means and/or blower means on the basis of said measurements and/or of defined intervals for at least ambient temperatures, air pressures, gas concentrations, local temperatures, air pressures, gas concentrations outside and/or inside the animal habitat structure,

it is possible to obtain a detailed knowledge of the conditions in and around any relevant area of the animal habitat structure and to act accordingly by regulating any of the regulating means, air treatment means, pumping means, suction means and/or blower means. The detailed knowledge and the many possibilities for adjusting the means in relation to the animal habitat structure and the ventilation duct system, provides an unsurpassed possibility for creating constantly optimal conditions for animal and humans in any animal habitat area inside the animal habitat structure as well as minimizing negative effects on the surrounding environment.

A weather station can be provided outside the animal habitat structure for measuring at least one of outdoor temperature, wind speed and wind direction. The operation of any of the regulating means, air treatment means and/or the pumping means, suction means, or blower means can be at least partly adjusted and regulated based on said weather station measurements. Details on the outside conditions as wind speed, wind direction and temperature can provide information, important in order to be able to maximize the effect of the ventilation duct system and indoor and outdoor environment, while at the same time minimizing the energy consumption for operating the many means required for operating the animal habitat structure.

The regulations can be performed manually or automatically depending on what suits the operation of specific animal habitat structures best under different conditions and under different circumstances. It is also possible to have an automatic regulation in some situations and a manual regulation in others, freeing time for the personnel to concentrate on the most important or unusual regulations while e.g. trivial and/or constant regulations may be performed automatically.

Remote control, by means of a central control unit, of the first airflow and a first air pressure and/or a second airflow and a second air pressure and/or the regulating means, provides the advantage of being able to control all or some of the regulations from central hold, and provides the possibility for a high and effective utilization of the animal habitat structure. The central control unit monitors all possible operational components and conditions, and allows the personnel to have a real-time, updated, clear overview of such, to thereby minimize the risk of unnoticed failures.

If the weather station, the regulating means, the air treatment means and/or the pumping means, suction means, or blower means is connected to a central data unit for processing said parameters, data exchange between said weather station, the regulating means, the air treatment means and/or the pumping means, suction means, or blower means and the central data unit, said central data unit can monitor the physical conditions in multiple sites in or around the animal habitat structure and can assist in regulating the regulating means, the air treatment means and/or the pumping means, suction means, or blower means accordingly and tune operation of the animal habitat structure.

In the preferred embodiment according to the present invention the central data unit is a computer performing the steps of
- registering measurements from the weather station and/or the detection means,
- calculating an updated operation mode of the regulating means, pumping means, suction means, or blower means and/or the treatment means based on said measurements,
- executing the operation mode, and
- transmitting information of the updated mode of operation of any of the regulating means, pumping means, suction means, or blower means and/or the treatment means, and optionally data on measurements from the weather station and/or the detection means, and on the operation of the regulating means, treatment means and/or the pumping means, suction means, blower means to one or more local data units.

Detailed knowledge of the physical conditions such as temperature, air quality, operation of the many individual means affecting the environment in the animal habitat structure can advantageously be achieved. Based on this knowledge the central data unit may calculate and update the operation mode of the individual means in order to ensure predefined optimal conditions in any part inside or outside the animal habitat structure. When data on the physical conditions and operation of the different means are sent to local data units it is possible for personnel to constantly be informed on the status of the animal habitat structure and the ventilation duct system, as well as having the possibility of remote controlling or adjusting operation via the local data unit.

Advantageously the ventilation volume through the ventilation duct system is 10 - 60% of the total ventilation volume of the stable structure, and even more advantageously 25 - 45 % of the total ventilation volume of the stable structure. These intervals ensure a significant reduction of the waste gas levels in important areas in and/or around the animal habitat structure. The possibility to work within an interval instead of at a specific value allows for the operation of the ventilation duct system at any time and at energy optimal level while still ensuring the removal of the waste gases.

A user can interact with the central data unit via the local data unit and thus be able to remote control the operation of e.g. the regulating means, the air treatment means and/or the pumping means, suction means, or blower means, in order to react quickly to acute situations or simply to e.g. turn off the light in an animal habitat area if needed.

The local unit can be a PDA, mobile phone and/or portable computer or other type of device, which enables the user to receive and/or send data from/to the central data unit. Preferably the local data unit is a standard unit as this helps keep the cost down as no special components are needed.

Specifically, the method is ideal for removing ammonia in ambient air in the animal habitat structure above the animal habitat structure surface. Ammonia is poisonous, thus the ability to control the ammonia levels in and outside an animal habitat structure is an advantage. Being able to, at the same time minimize the energy consumption to pumps, electrical curtain, heating means, cooling means, etc., as the present method allows for due to the inventive ventilation duct system and controlling of such ventilation system, is even more desirable with respect to both environment, emissions, and economy.

The ventilation duct system can advantageously be used in an animal habitat structure designed to optimize an animals total transport distance measured in a cycle from birth to death and/or from insemination to insemination, to be the shortest possible, as the effectiveness and capacity of the ventilation duct system allows for a wide range of stable structures without the usual limitations on the width and length of the buildings and of the use of slatted floors.

Advantageously the animal habitat structure is a stable structure. The animal habitat surface may be a complete or partly slatted floor and by means of the present ventilation duct system and method still be able to have an ideal indoor climate and air quality for both animals and humans. This is in contrast to traditional ventilation systems, which are not able to provide a sufficient removal of the waste gases when slatted floors are used, as will be more clear from the following examples and drawings, in which an exemplary animal habitat structures are a cattle stable or a poultry house. The ventilation ducts are shown as being tapered, although any cross-sectional area is foreseen within the scope of the present invention. Thus the figures are provided solely for illustrating the versatility of the present invention and should not be taken as limiting it.
Fig. 1 shows schematically, seen from above, parts of a ventilation duct system in a cattle house with a slatted floor on which a plurality of cows are resting or moving around,
fig. 2 shows a section take along line II-II in fig. 1,
fig. 3 shows schematically a sectional view taken through a ventilation duct system in a part of a poultry house,
fig. 4 shows schematically a ventilation duct system in a large cattle stable with multiple detection means, regulation means, pumping, sucking or blowing means, and air treatment means connected to a central data unit,
fig. 5 shows, in perspective, a farm house seen from outside,
fig. 6 shows a fragmentary view taken along line VI-VI in fig. 5 of a section of a central part of the stable structure,
fig. 7 shows the communication paths between operational means for the ventilation duct system, the central control data unit, and remote user,
fig. 8 is a flow diagram of exemplary regulation instruction paths,
fig. 9 shows a flow diagram of the reaction to an alarm triggered by one of the detection means,
figs. 10a-b shows schematically the difference between conventional use of a central computer and the method according to the present invention,
figs. 11a-c shows comparative tests of a ventilation duct system in a milk barn at an outside wind speed of 1 m/s, and
figs. 12a-c shows comparative tests of a ventilation duct system in a milk barn at an outside wind speed of 5 m/s.

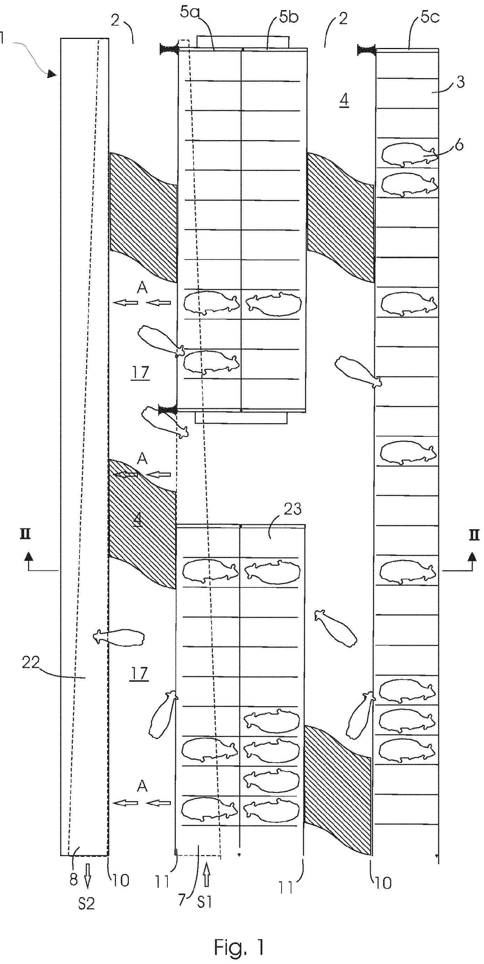

Fig. 1 shows a ventilation duct system 1 with two waste reception means 2, namely waste reception ducts 2 in the form of slurry pits 2. The waste reception ducts 2 are located below an animal habitat surface 3 and directly under slatted animal habitat surfaces, gratings 4. The stable structure houses rows 5a, 5b and 5c of cows 6. A tapered first air duct 7 and a tapered second air duct 8 are arranged on opposite long sides 11,12 of the waste reception duct 2. The first 7 and second air ducts 8 are tapered by way of example, but it is to be understood, that other cross sections also can be used as well as the direction in which the air ducts tapers can vary depending on where the air inlet and/or outlet with belonging air treatment means are positioned.

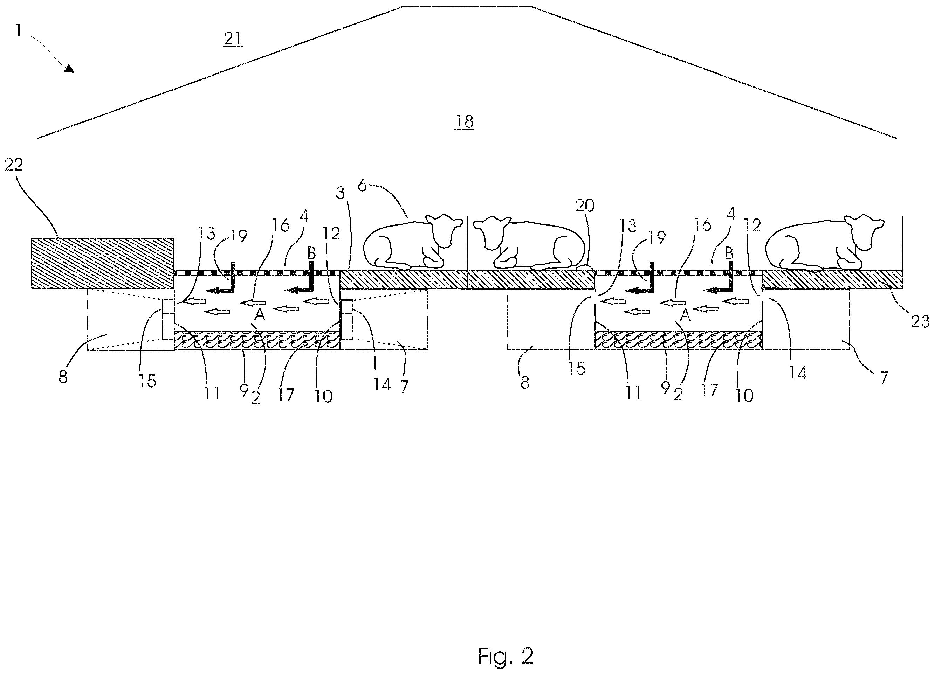

Fig 2. shows a sectional view of the ventilation duct system 1 in fig. 1 taken along the line II - II. The waste reception means 2 is a substantially U-shaped longitudinal channel or receptacle with a bottom 9, a first long side 10 opposite a second long side 11. The first long side 10 has a number of fist holes 12 located near the slatted floor 4 and away from the bottom 9. Similarly, the second long side 11 has a number of second holes 13 located near the slatted floor 4 and away from the bottom 9. The waste reception ducts 2 are arranged between a first tapered air duct 7 on the first long side 10 of a waste reception duct 2, and a second tapered air duct 8 on the opposite second long side 11 of a waste reception duct 2, and in fluid communication with said waste reception duct 2. The first tapered air duct 7 and the second tapered air duct 8 taper, in the exemplary embodiment for a ventilation system 1, in the same direction, and provide an air curtain, as indicated with open arrows A, and an air pressure gradient over the waste reception ducts 2. The first air duct 7 has a number of first air openings 14, which are in fluid communication with the waste-receiving duct 2 via first holes 12. Similarly, the second air duct 8 has a number of second air openings 15, which are in fluid communication with the waste-receiving duct 2 via the second holes 13.

Blowing or sucking means (not shown) creates an air stream along the length direction of both the first 7 and second air duct 8, as indicated with arrows S1 and S2 in fig. 1. In the first air duct 7 a slight positive pressure is created, so that air is blown in from the first air duct 7, through the first air openings 14 and the first holes 12 to the waste reception duct 2. Simultaneously in the second air duct 8 a negative pressure is created so that air is sucked from the waste reception duct 2 to the second air duct 8 through the second holes 13 and the second air openings 15, to thereby create the air curtain A, by means of air stream 16 created by the pressure gradient across the width of the waste reception means 2. This air curtain A prevents gases, such as ammonia, from waste 17 to diffuse into a stable room 18 above the slatted floor 4. Furthermore, the air pressure in the second air duct 8 is low enough to induce a second air stream 19 from the stable room 18 through the slatted floor 4 into the waste reception duct 2 and into the second air duct 8, as indicated with closed arrow B. This ensures that gasses from waste 20, which has not passed through the slats, but are in the vicinity of the slatted floor 4, will also be evacuated by the second air stream 19 through the waste reception duct 2 and into the second air duct 8. By use of the here described setup of waste reception duct 2 and air ducts 7,8, a ventilation duct system 1 is provided, which keeps the waste gases localized in the waste reception ducts 2 and ensures that gases from waste 17,20 in and near the waste reception ducts 2 are evacuated quickly and without spreading the potentially harmful gases in the stable room 18 or to the surrounding environments 21. The cows 6 are resting on sleeping areas 23 and passes the slatted floor 4 to reach a feeding area 22.

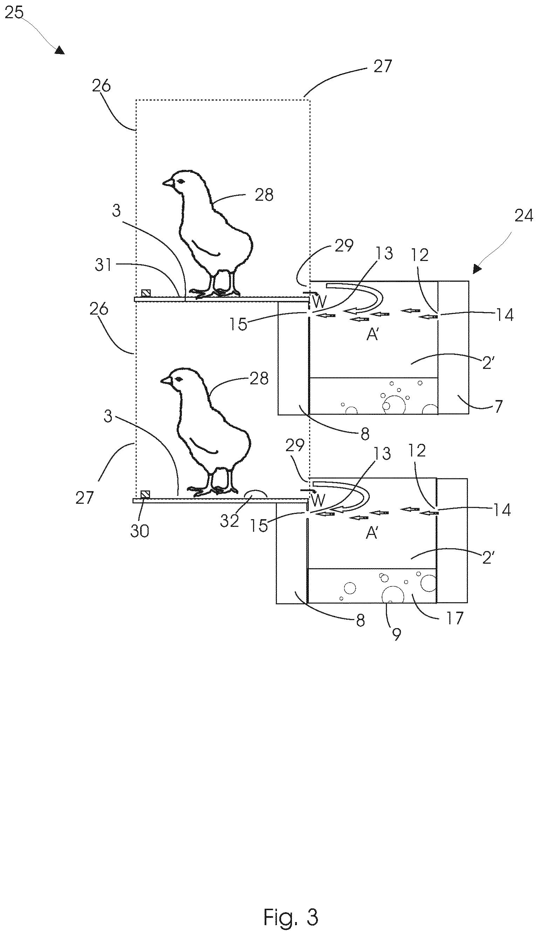

Fig. 3 shows a second embodiment of a ventilation duct system 24 according to the present invention, comprising two waste reception means 2' situated above each other. In the present example a stable structure 25 houses rows 26 of cages 27 over each other with chickens 28. The ventilation duct system 24 corresponds substantially to the first embodiment of the waste reception means 2, shown in figs. 1 and 2, and for like parts same reference numerals are used. The second embodiment of the ventilations system 24 differs in that the ventilations ducts 7,8 have rectangular cross sections but creates in a similar manner an air curtain A' crosswise the waste reception means to remove gaseous matter out through the second air duct 8. The cages 27 are equipped with a waste clearing opening 29 and scraper 30 for clearing the animal habitat surface 31 instead of a slatted floor. This cleaning mechanism works by the scraper 30 with regular intervals scrapes along the animal habitat surface 31 in order to push waste 32 through the waste clearing opening 29 and into the waste reception duct 2, as indicated by arrow W.

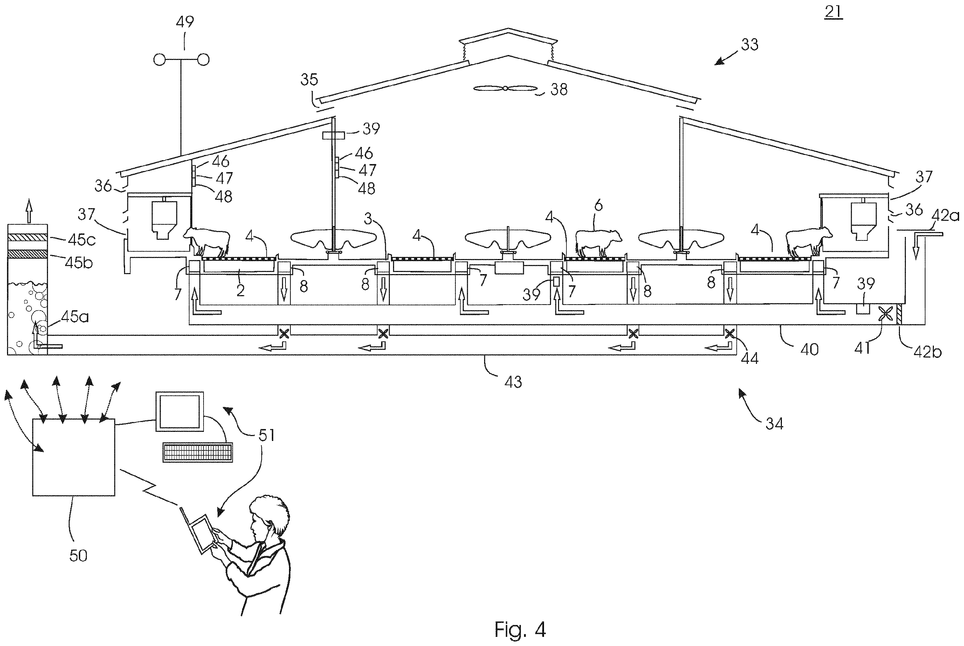

Fig. 4 shows a large stable structure 33 for cattle 6. The stable structure 33 has a ventilation duct system 34 consisting of four waste reception means 2. The stable structure 33 has a number of regulation means, including dampers 35 in the sealing, ventilation openings 36, optionally provided with filter means, in the outer walls 37, fans 38 and heaters/coolers 39. The first air ducts 7 are connected by their first ends via a first central duct 40 through which air is sucked or blown in by use of fans 41. The air is taken in from the surroundings 21 through first air treatment means 42a, 42b, in the present example a rough screen 42a and a filter 42b. The first air treatment means 42a,42b ensure a predetermined air quality, e.g. that leaves or small animals cannot enter the ventilation duct system 34, or if more advanced filters or devices for adding additives to the incoming air are used, bacteria and vira contained in the air led to the first air ducts 7 are removed. Similarly, the second air ducts 8 are connected by their second ends to a second central duct 43. Fans 44 suck or blow to induce a pre-selected airflow and air pressure in the second air ducts 8. The contaminated air in the second air ducts 8 are taken out through the second central duct 43, by use of the fans 44. From the second central air duct the contaminated air is led through second air treatments means 45a,45b,45c, in the present example a basin 45a for precipitation of e.g. ammonia, a carbon filter 45b and a last fine chemical filter 45c. The second air treatment means 45 ensures a specific and selected quality of the air emitted from the stable structure, and enables the compliance with e.g. local or national environmental regulations. The stable structure 33 and ventilation duct system 34 also comprises a number of detection means e.g. temperature 46, gas 47 and humidity sensors 48, inside the stable structure 33. On the outside a weather station 49 is situated for measuring temperature, wind speed and wind direction.

The stable structure 33 and ventilation duct system 34 are interconnected with a central data unit 50. The central data unit 50 receives data from at least some of the detection means 46,47,48,49 and can regulate the operation of at least some of the regulation means 35,36,38,39. The regulation can, if desired, be handled automatically by the central data unit 50 on the basis of predetermined intervals for temperature, CO₂-levels, humidity etc., or the central data unit can notify an operator by sending a signal to e.g. local data device 51, for example a PDA or a mobile phone. The operator can either perform the regulation of e.g. the omni light in one or more sections of the stable structure 33 manually or he/she can perform the regulation by sending instructions to the regulating means 35,36,38,39 from the local data device 51 via the central data unit 50.

The central data unit 50 can further control the feeding and watering systems to the animals 6, monitor the supplies of feedstock and the quality of this, regulate the light in one or more sections of the stable structure 33, monitor fire and smoke detectors etc.

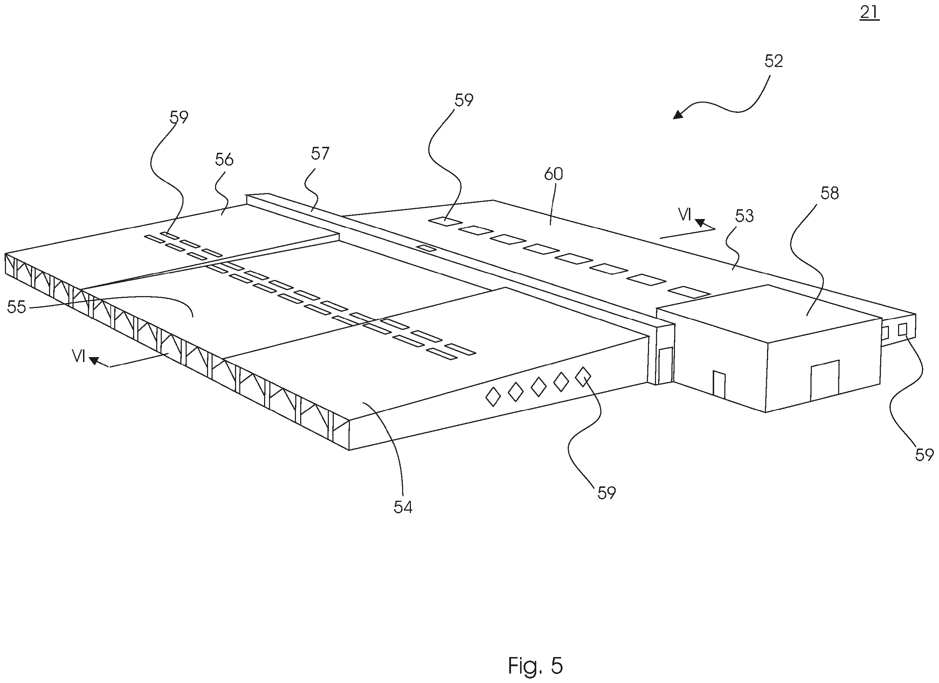

Fig. 5 shows an exemplary large animal habitat structure 52, i.e. a swine farm. The animal habitat structure 52 comprises six sections: a first stable section 53, a second stable section 54, a third stable section 55, a fourth stable section 56, a central tower section 57 and a feedstock section 58. Each stable section constitutes an animal habitat section, which can be divided into subdivisions, animal habitat areas. The animal habitat structure 52 is designed with large deep and wide sections, many windows 59 in both sides and a roof 60. The design makes it possible to have a very advantageous logistic design of the animal habitat structure 52, as well as it ensures a good indoor climate for animals and personnel, and is made possible due to the air curtains provided by the flow through first and second air ducts 7,8 across waste receiving means 2. The indoor air quality and general climate as well as the outdoor environment 21 is significantly improved further by the ventilation duct system 1 according to the present invention.

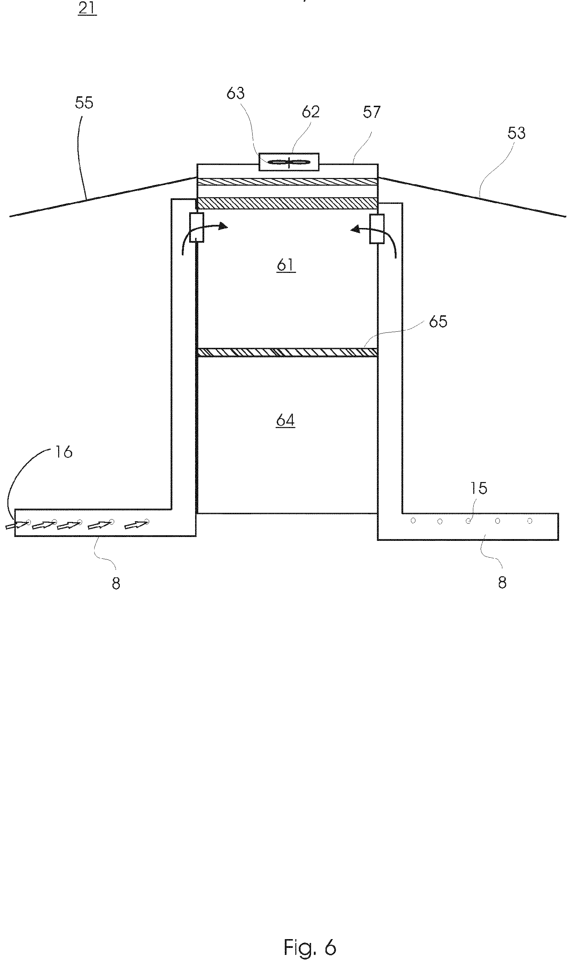

Fig. 6 shows a fragmentary view taken along line VI-VI in fig. 5 of a section of a central part of the stable structure 52. The central part includes part of the first stable section 53 and the third stable section 55 surrounding the central tower section 57. Each of the stable sections 53,55 contain second air ducts 8, with second air openings 15 and air stream 16. Each second air duct 8 leads to a common filter area 61 located in a gas outlet end of the central tower section 57. The filter area 61 includes different filter means for removing pollution from the contaminated air before it is lead out into the surroundings through a ventilation outlet 62, by use of a fan 63. The filter area 61 is separated from the walking area 64 by an airtight horizontal surface 65.

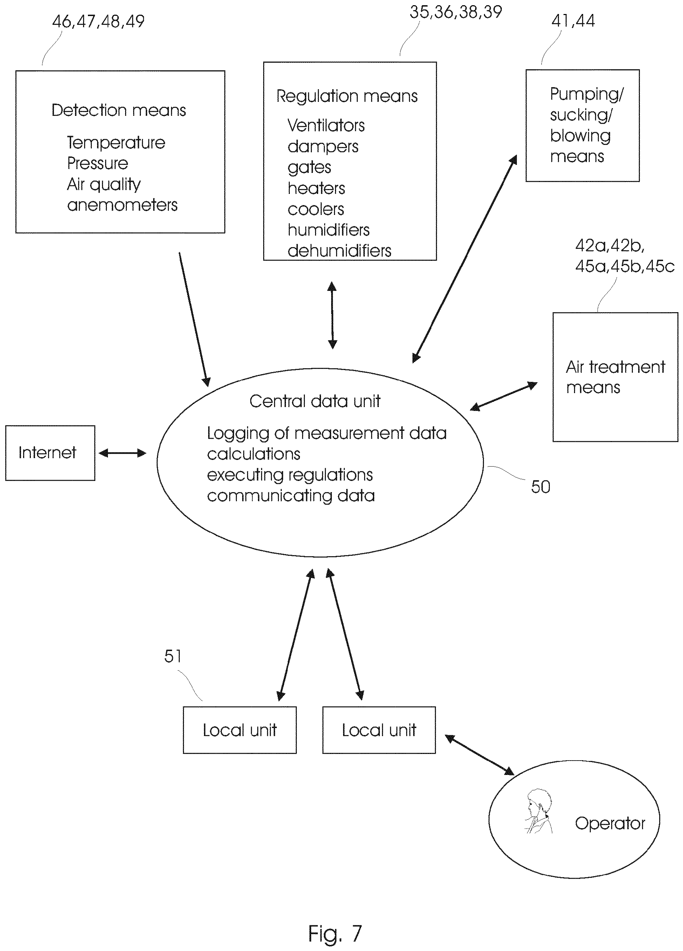

Fig. 7 show the communication paths between operational means for the ventilation duct system, the central control data unit 50, the detection means 46,47,48,49, regulation means 35,36,38,39, means for pumping, blowing or sucking, air treatment 42a,42b,45a,45b,45c means and local data units 51, which can be operator controlled. The central data unit 50 receives measurement data about temperatures, air pressure, gas concentrations and general air quality, humidity and wind speed and direction in different locations inside and outside the stable structure 1,25,33. These measurement data are registered and can also be stored, and are compared with ideal values at each location. Based on the measurement data the central data unit regulates the operations of the regulation means, i.e. ventilators, fans, dampers, gates, heaters, coolers, humidifiers, dehumidifiers, etc. as well as the operation of the air treatment means and the means for pumping, sucking, or blowing. Information about measurement data and on the operations of regulation means, air treatment means and the means for pumping, sucking, or blowing can be send to local data units 51 wherefrom an operator can evaluate the status of the overall stable structure and the duct system. If necessary the operator can access the central data unit 50 from the local data unit 51, e.g. a PC or a PDA, and give specific instructions to e.g. turn the light in parts of the stable structure to night light, increase the ventilation or stop local heating in areas which are at the moment empty of animals, etc. This list of type and amount of information communicated between the central data unit and the user by means of the local data unit is not exhaustive. Furthermore, the central data unit can control forage and water supply to life stock, monitor supplies of different types, etc.; also this list is not exhaustive.

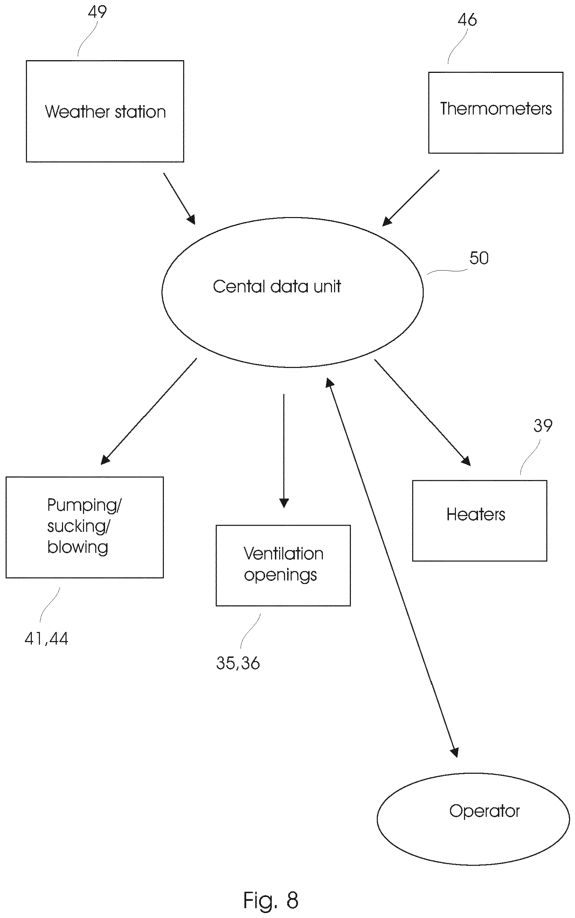

Fig. 8 shows a flow diagram of exemplary regulation instruction paths of the airflow in the first and second air duct 7,8 by the means for sucking, pumping, or blowing, and of the airflows in the stable structure by means of e.g. the dampers 35 in the roof and ventilation openings 36 in the outer walls 37, as shown in e.g. fig. 4. The regulation is, in the present example, based on data from detecting means outside the stable structure, namely a weather station 49, and detecting means inside the stable structure, the thermometers 46. The central data unit 50 receives updated data continuously or with predetermined intervals from the detecting means 49 outside the stable structure. As the outside wind conditions can have a large effect on the indoor ventilation in especially open or semi-open stable structures, which are ventilated by means of natural ventilation, data on the outside conditions can be used to greatly improve the ventilation inside the stable structure. The central data unit 50 processes the data from the outside detection means 49 and, on the basis hereof, regulating the means for pumping, sucking, or blowing 41,44 air in the first 7 and second 8 air duct to ensure an optimal effect of the ventilation duct system 1 in the stable structure. Temperatures inside and outside the stable structure are also measured and based on this data and on the data from the outside detection means 49, the dampers 35 in the roof, ventilation openings 36 in the outer walls 37, and heaters/coolers 39 can be adjusted up and down, all in all creating the optimal ventilation and temperature conditions in all sections of the stable structure 1,33. Temperatures inside and outside the stable structure and light inside the stable structure can also be regulated by raising and lowering sun screens or wall curtains to allow more or less sunlight to heat the air in the stable structure and light up the interior space to save power to artificial lighting.

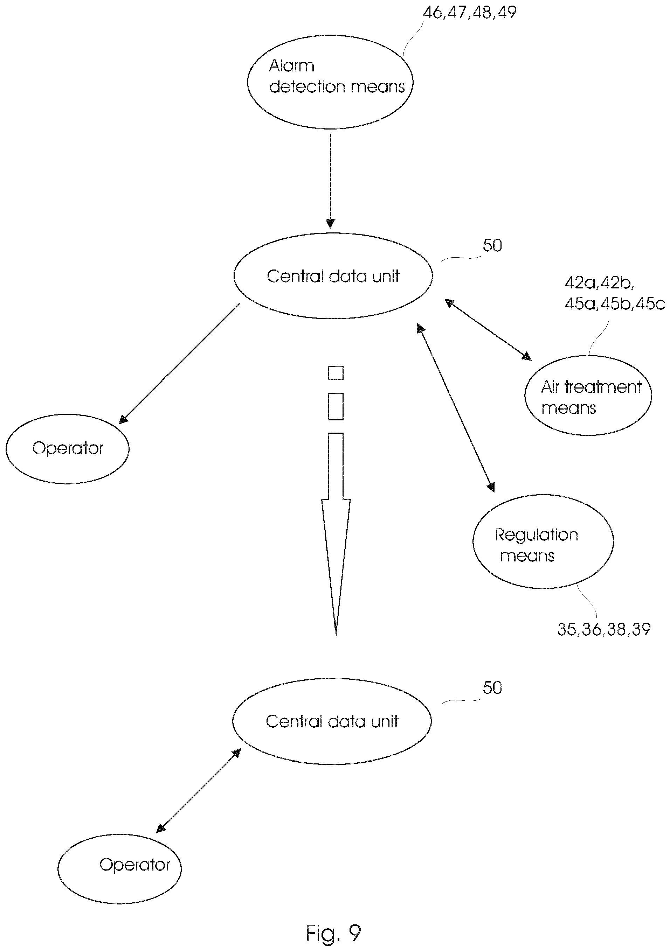

Fig. 9 shows a flow diagram of the reaction to an alarm triggered by one of the detection means. First the measurement of a value outside the acceptable interval for a specific data takes place and registers that e.g. the ammonia concentration is too high in a section of the stable structure. This information is processed by the central data unit 50, which hereafter notifies the operator and initiates a regulation of the relevant means. In the present case the means for pumping, sucking or blowing air in the first and second air duct 7,8 are regulated to increase the pressure gradient between the stable section and the second air duct 8 and the pressure gradient between the first and second air duct 8, so that more contaminated air is sucked into the second air duct 8 from the stable room above the animal habitat surface and from the waste reception duct. Hereby the ammonia level in the stable section is lowered to the current ideal value. When the acceptable values have been restored the central data unit notifies the operator hereof, and the operator can approve the new levels if necessary. During the regulation process, the operator can at any time intervene in the regulation from e.g. a local data unit remote from the stable, from the central data unit or directly at the regulation means.

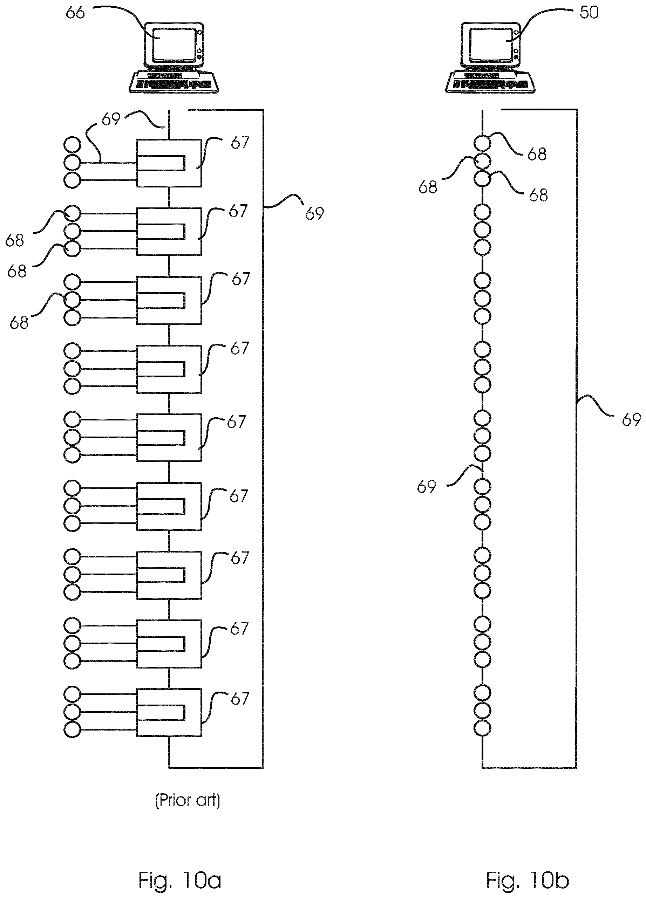

Figs. 10a and 10b show schematically the difference between traditional control systems and the method according to the present invention. The traditional system has a central computer 66 connected to a number of local stable computers 67. Each stable computer 67 is then connected to a number of functional units 68 controlled and monitored by the local stable computer 67. The system and method according to the present invention differs in that the inventive system has a central data unit 50, which is directly linked to the functional units 68 inside and outside the animal habitat structure. The fact that the central data unit 50 is directly linked to any relevant functional unit 68 inside and around the animal habitat structure means that the entire system is simplified. This simplification is logistically an advantage as it minimizes the use of endless lengths of cables 69, which take up a lot of space, and significantly enhances the overview of the entire animal habitat structure with all its functional elements including the ventilation duct system according to the present invention. The simplified cabling structure further enables simple and fast coordination of the many means for regulating airflows, temperature, air quality etc. in relation to the ventilation duct system and the entire animal habitat structure, thus providing an efficient operation of the ventilation duct system and animal habitat structure to ensure a safe and energy efficient operation. The central data unit 50 may also be in communication with a number of e.g. mobile local data units, as earlier described.

Preferably the method and system according to the present invention is based on and comply with most common standards to avoid problems with introduction of new or replacement equipment and to reduce costs as well as it functions with equipment from different manufacturers.

The arrangement with the central data unit 51 enables a smart and logistically optimized system, with the use of as few cables and as many hidden and assembled means as possible, to avoid cable clutter and to minimize the need for excessive cleaning of free standing units.

Computational Fluid Dynamics (CDF) methods can be used to investigate potentials of using the present invention in naturally ventilated animal habitat structures, such as cattle stables and pig farms, where about 8.5% ammonia from waste evaporates to the stable room at about 15 C. The following examples, tests and analyses are based on a 2 dimensional cross section of a proposal for a 72 m wide milking cow barn. The developed CFD model aims to predict the ammonia emission from slurry pits, and its distribution of emission through the ventilation ducts and through the openings in walls, roof and ridge. The model was used for determination of the share of the total emission from the slurry pits that can be expected to be included in the slurry pit exhaust, provided by the air curtain across the slurry pit, depending on outdoor temperature, wind speed and different adjustment of wall curtains or openings in roof and ridge.

### Example

### The test animal habitat structure

The calculations in this example are based on a proposal for a well-insulated 72 m wide animal habitat structure, more specifically a milking cow barn, with regulation means, which are large controllable ventilation openings in side walls and in the roof. The barn includes eight 3 m wide slatted floor aisles above waste receiving means. The waste reception means contain first and second openings.

The following analyses are based on the assumption that the capacity of the ventilation duct system corresponds to 212 m3h-1 HPU-1, which is a sufficient ventilation capacity in cold periods, and will secure that indoor temperature can be limited to 15°C if the outdoor temperature is below 8°C. A HPU is defined as a Heat Producing Unit, such as a regular cow, or other living creature or creatures in combination that develops a corresponding amount of heat. In Denmark such conditions cover about 55% of the time of the year. In that part of the year the entire ammonia emission can be collected in the second air ducts of the ventilation duct system if the barn openings are restricted sufficient to maintain a negative pressure that avoids air moving out of the barn, and the system can be regarded as a purely mechanical ventilation system. To get sufficient ventilation capacity in the remaining part of the year it becomes necessary to combine the mechanical ventilation system with natural ventilation. But to reduce ammonia emission through building openings it will be beneficial to use partly restricted building openings in some part of the time. Consequently, the following three ventilations modes can be defined. A first mode of pure mechanical ventilation, i.e. when outdoor temperature is below 8°C, corresponding to 55% of time in Denmark, a second mode of combined ventilations with partly restricted openings, i.e. when outdoor temperature is between 8 and 10°C and, depending on wind condition, some of the time if temperature is between 10 and 15°C. In Denmark such conditions cover about 15% of the time. A third mode of combined ventilations with unrestricted openings, i.e. when outdoor temperature is above 15°C and, depending on wind conditions, some of the time when temperature is between 10 and 15°C. In Denmark such conditions will cover about 30% of time. Definition of three ventilation test cases
- Case A: No exhaust of contaminated air through the second air ducts.
- Case B: Includes exhaust of contaminated air through the second air ducts, i.e. creation of air curtain from the first air holes to the second air holes.
- Case C: Includes exhaust of contaminated air through the second air ducts and clean air blown in from the first air holes, i.e. creation of air curtain from first air holes to the second air holes.

It is assumed that:
- the slatted floor has 15% opening area.
- animal density of 1 HPU pr. running meter slatted floor.
- magnitude of air supply to slurry pit inlet is 50 m3h-1HPU-1. corresponding to 50 m3h-1 pr. running meter slatted floor.
- downward velocity through slats for slurry pit exhaust is 0.1 m/s (162 m3h-1 HPU-1) plus clean air blown in from the first air holes (50 m3h-1 HPU-1) = 212 m3h-1 HPU-1 in case B and C.

The test is simulated under the further following assumptions:
- Simulation in a 0.1 m long test section of the barn.
- Slatted floor consist of 0.036 m slots and 0.164 m slats, and the test section consist of one half slot and one half slat.
- Slots are divided into 3 pieces (0.1 m closed, 0.8 m opened, 0.15 m closed, 0.9 m opened, 0.15 m closed, 0.8 m opened, 0.1 m closed).
- Waste height 0.4 m below slats.
- The temperature dependency of ammonia concentration on slurry surface is based on model results (A.J.A. Aarnink, A. Elsing/Livestock Production Sciences 53 (1998) 153-169) that show that one degree increases in slurry pit temperature resulted in 6.8% increase in ammonia emission.

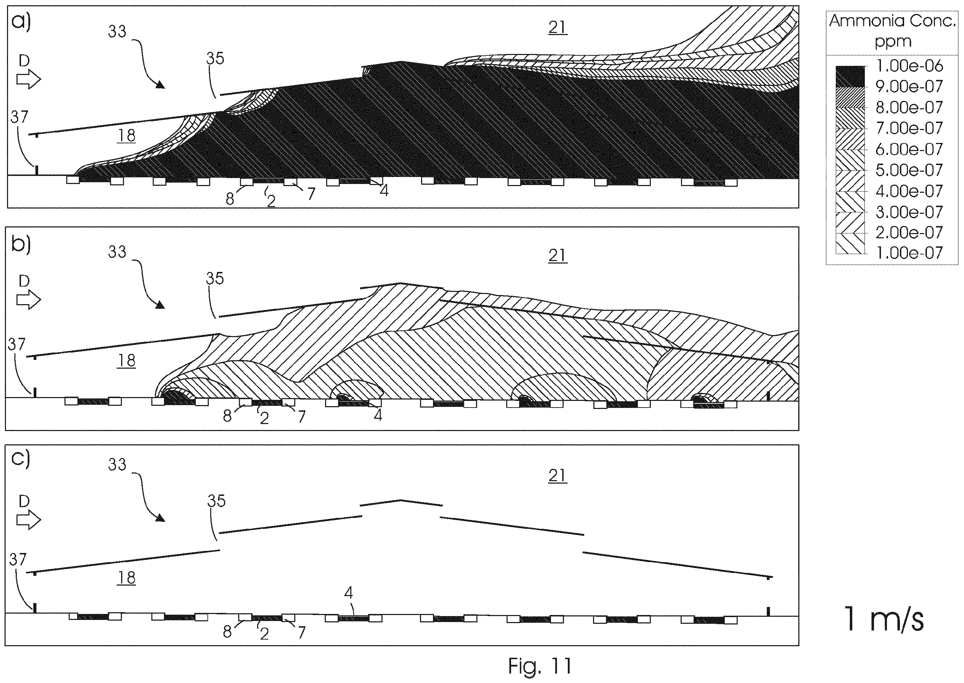

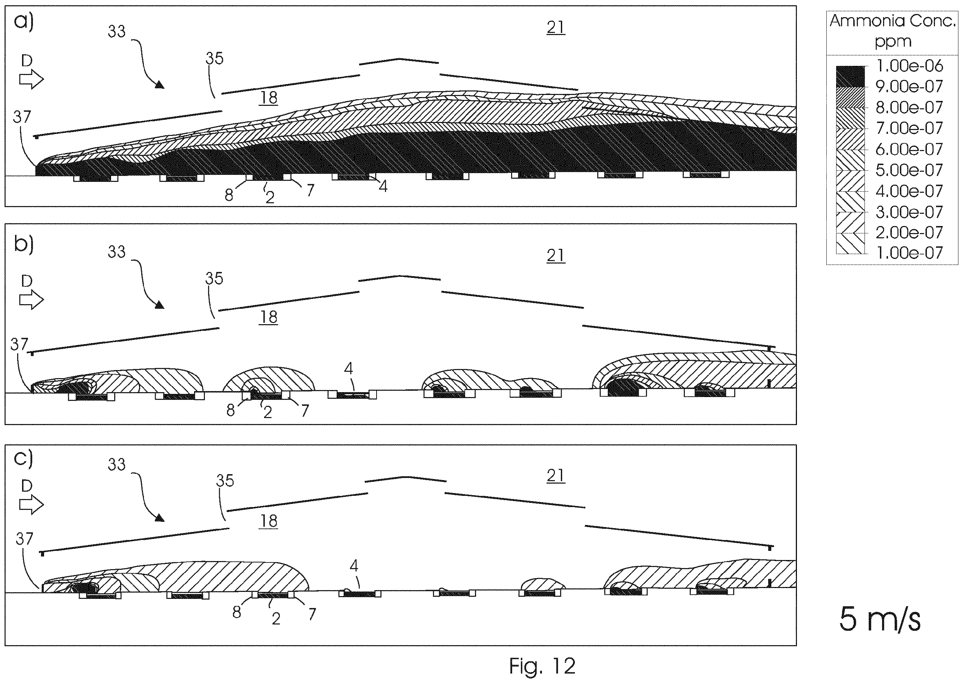

The results of the tests and calculations are seen in fig. 11a-c and fig. 12a-c. The figures convincingly illustrate the effect of the air curtain in the ventilation duct system according to the present invention. The increasing concentrations of ammonia are indicated by using hatchings of increasing intensity, as illustrated in the boxes to the right in the figures.

Figs. 11a shows Case A, fig. 11b shows Case B, and fig. 11c shows Case C to in comparison illustrate the effect of the ventilation duct system according to the present invention on the ammonia concentrations in a milking cow barn with natural ventilation through regulated openings 35,36 in barn wall sides and roof, at an outside wind speed of 1 m/s. The wind direction is indicated by arrow D. Fig. 11a illustrates, that in Case A, there is very high levels of ammonia inside 18 and outside 21 the barn before activating exhaust of contaminated air from the second air ducts 8. In fig. 11b the ventilation duct system 1 exhausts contaminated air from the second air openings and thus creates an air curtain across the waste reception means 2. By establishing the exhaust through the second duct 8, the concentration of ammonia is somewhat reduced but the concentrations of ammonia are still of discomfort to animals and personnel inside the stable, although emission to the environment is eliminated. Fig. 11c illustrates the convincing effect of an air curtain according to the present invention where contaminated air not only is sucked into the second air duct 8 but also is blown out of the first air duct 7. The effects on the ammonia contamination inside the barn and in the surroundings 21 are significant. The ammonia content in the barn is transferred to and kept inside the waste reception means 2. In all areas inside 18 the barn and outside 21 the barn, the breathing air is free of ammonia, even at the sleeping and feeding areas. The breathing air quality is thus very good and substantially free of ammonia smell.

Figs. 12a,12b and 12c show in a similar manner Case A, Case B and Case C but at the much higher outside wind speeds of 5 m/s. The wind direction is indicated by arrow D. The distribution of the highly contaminated air is different from above, when the wind speed increases, as the ammonia-contaminated air is pressed in the wind direction by the higher wind speed. Still the effect of the ventilation duct system according to the present invention is very clear, and in fig. 11c, which shows the beneficial results from air curtains obtained by air sucked into the second air duct 8 and blown out of the first air duct 7 the ammonia contaminated air is localized to areas in the immediate vicinity of the waste reception means 2 at highly acceptable concentration. Should the detection means reveal that the ammonia concentration is too high the regulation means can be activated to increase the speed of the first and/or second airflows through the first and second air ducts 7,8 by means of the central data unit. The method according to the present invention allows for the differentiated regulation of the first and/or second airflows through the first and second air ducts 7,8, so that the ventilation can be upped through the waste reception means 2 with the highest surrounding ammonia concentration. I.e. in the present example preferably the ventilation through the waste reception means 2 to the outer left is increased.

The central data unit 50 and the local data 51 units may be configured with suitable software for controlling the method and the use of the ventilation system according to the present invention. The software expediently includes a user interface for remote operation of the data units via a local network and/or the Internet. The software may trigger an automatic actuation of any means, that can be actuated for affecting a change of a condition inside the stable structure for improving air quality inside and outside said structure, or the software may just or also be configured for transmitting information to an operator enabling him/her to manually make a mechanical change by moving to e.g. a fan, a sun screen etc. and manually changing the operation of this means. This configuration also has the benefit of reducing cabling in the stable structure and data transmission can be made wireless if preferred.

The above results clearly show that the introduction of an air curtain, caused by an air pressure gradient across the waste receiving means provides a highly effective ventilation duct system.

The ammonia concentration is almost completely kept at floor level and in the slurry pits, and the breathing air in the room above the slatted floor is thus ventilated without admixing the unpleasant gases from the animals. Thus conventional ventilation of said room can, if preferred, be maintained or the entire room can be ventilated in conjunction to cleaning the air from animal waste gases, by means of the inventive air curtain provided by the inventive ventilation duct system.

Thus the system and method according to the present invention provides the possibility for exchanging the air in even very large animal habitat structures as stable sections or stable structures consisting of several small or large stable sections. It is possible to exchange the air in a constant and uniform manner throughout the animal habitat structure if desired.

Most of the air in the space below the roof can according to the invention be ventilated by ordinary ventilation means in animal habitat structures implementing the present invention, be means of which polluting exhaust gasses from animals can be kept substantially at or below the animal habitat surface and be evacuated through the second air ducts by means of the inventive air curtain.

The second air duct may evacuate more or less polluted and contaminated air along the entire lengths of one or more parts of the ventilation ducts systems or just along a part of the length, as well as degree of evacuation can be selected individually along the length of parts of the ventilation ducts system in dependency of need for clean air in different areas of the animal habitat structure using the method according to the present invention.

## Claims

1. A ventilation duct system (1,24,34) for minimizing air pollution in and/or around an animal habitat structure (25,33,52) with at least one animal habitat surface (3), said ventilation duct system (1,24,34) comprising waste receiving means (2) configured for receiving waste (17,20,32) from and/or through at least a part of the at last one animal habitat surface (3), where the ventilation duct system (1,24,34) is located at least partly below the at least one animal habitat surface (3) and comprises means for generating a pressure difference between a first long side (10) and an opposing second long side (11) of the waste receiving means (2) to generate an air pressure gradient across the width of the waste receiving means (2), where the ventilation duct system further comprises regulating means (35,36,38,39) for regulating natural ventilation located away from the waste receiving means (2), and said regulating means being adapted to control airflow in the animal habitat structure (25,33,52) **characterized in that** it comprises detection means located in or away from the waste receiving means, and that said detection means are adapted for monitoring the air quality and physical conditions in multiple sections of the animal habitat structure as well as in the immediate surroundings, and **in that** measurement data provided by the detection means are used as input for managing the regulation means.

2. A ventilation duct system (1,24,34) according to claim 1, **characterized in that** the waste receiving means (2) comprises at least one first opening (12) in the first long side (10) of the waste receiving means (2), and at least one second opening (13) in the opposing second long side (11) of the waste receiving means (2) and that the air pressure gradient is established from the at least one first opening (12) to the at least one second opening (13).

3. A ventilation duct system (1,24,34) according to any of the claims 1 or 2, **characterized in that** the ventilation duct system (1,24,34) further comprises a first air duct (7) with a first inlet end and an opposite first outlet end, and at least one first ventilation hole (14) for at least gaseous communication with at least the waste receiving means (2), and a second air duct (8) with a second inlet end and a second outlet end, and at least one second ventilation hole (15) for at least gaseous communication with at least the waste receiving means (2).

4. A ventilation duct system (1,24,34) according to claim 3, **characterized in that** a first air pressure of a first airflow in the first air duct (7) is higher than a second air pressure of a second airflow in the second air duct (8), and the second air pressure is lower than a global ambient pressure or lower than at least one local ambient pressure in the animal habitat structure (25, 33, 52) and that the first air pressure is higher than the air pressure in the waste reception means (2).

5. A ventilation duct system (1,24,34) according to any of the preceding claims 3 - 4, **characterized in that** the ventilation duct system (1,24,34) further comprises a regulating means (35,36,38,39) located in the first air duct (7), second air duct (8) and/or waste receiving means (2).

6. A ventilation duct system (1,24,34) according to any of claims 1-5, **characterized in that** the regulating means (35,36,38,39) are selected from the group comprising ventilators (38), dampers (35,36)), gates, heaters (39), coolers (39), humidifiers, and dehumidifiers.

7. A ventilation duct system (1,24,34) according to any of the preceding claims 3 - 6, **characterized in that** the ventilation duct system (1,24,34) further comprises a detection means (46,47,48,49) located in or away from the first air duct (7), second air duct (8) and/or waste receiving means (2), at least some of the detection means (46,47,48,49) preferably being located outside the animal habitat structure (25,33,52), and/or said detection means (46,47,48,49) preferably being selected from the group comprising temperature sensors, humidity sensors, anemometers, light sensors, fire and/or gas sensors.

8. A ventilation duct system (1,24,34) according to claim 7, **characterized in that** airflow, air pressure and/or air quality in the first (7) and/or second air duct (8) is regulated by means of at least the regulating means (35,36,38,39), means (41,44,63) for pumping, sucking or blowing and/or air treatment means (42a,42b,45a,45b,45c).

9. A ventilation duct system (1,24,34) according to claims 7 or 8, **characterized in that** the detecting means (46,47,48,49), the regulation means (35,36,38,39), the pumping means (41,44,63), suction means (41,44,63), blower means (41,44,63) and/or the air treatment means (42a,42b,45a,45b,45c) are coupled to a central data unit (50).

10. A ventilation duct system (1,24,34) according to claim 9, **characterized in that** the central data unit (50) has
- means for registering measurements from the detection means (46,47,48,49),
- means for calculating the best operation parameters of the regulating means (35,36,38,39), pumping means (41,44,63), suction means (41,44,63), blower means (41,44,63) and/or the treatment means (42a,42b,45a,45b,45c) based on said measurements for a required mode of operation,
- means for executing the regulation of the regulating means (35,36,38,39), treatment means (42a,42b,45a,45b,45c) and/or the pumping means (41,44,63), suction means (41,44,63), blower means (41,44,63), and/or
- means for communicating data on measurements from a weather station (49) and/or the detection means (46,47,48,49), and on the operation of the regulating means (35,36,38,39), treatment means (42a,42b,45a,45b,45c) and/or the pumping means (41,44,63), suction means (41,44,63), blower means (41,44,63) to one or more local data units (51).

11. A method for minimizing air pollution in and/or around an animal habitat structure (25,33,52) with at least one animal habitat surface (3) and waste receiving means (2) configured for receiving waste (17,20,32) from and/or through at least a part of the at last one animal habitat surface (3), where the method comprises
- providing a ventilation duct system (1,24,34) at least partly below the at least one animal habitat surface (3),
- generating a pressure difference between a first long side (10) and an opposing second long side (11) of the waste receiving means (2) to generate an air pressure gradient across the width of the waste receiving means (2) by means of the ventilation duct system (1,24,34),
- controlling airflow in the animal habitat structure (25,33,52) by means of regulating means (35,36,38,39) for regulating natural ventilation located away from the waste receiving means (2),
- providing detection means located in or away from the waste receiving means,
- monitoring the air quality and physical conditions in multiple sections of the animal habitat structure as well as in the immediate surroundings, and
- using measurement data provided by the detection means as input for managing the regulation means.

12. A method according to claim 11, **characterized in that** the method further comprises creating a first airflow and a first air pressure in a first air duct (7) and/or a second airflow and a second air pressure in a second air duct (8) by means of the pumping means (41,44,63), suction means (41,44,63), blower means (41,44,63) and/or the regulation means (35,36,38,39).

13. A method according to claims 11 or 12, **characterized in that** the method further comprises
- measuring at least one parameter selected from the group comprising temperatures, air pressures, gas concentrations, local temperatures, air pressures at one or more locations, and
- regulating the operation of the regulating means (35,36,38,39), air treatment means (42a,42b,45a,45b,45c), pumping means (41,44,63), suction means (41,44,63) and/or blower means (41,44,63) on the basis of said measurements and/or defined intervals for at least ambient temperatures, air pressures, gas concentrations, local temperatures, air pressures, gas concentrations outside and/or inside the animal habitat structure.

14. A method according to any of claims 11-13, **characterized in that** the method further comprises providing a weather station (49) outside the animal habitat structure (25,33,52) for measuring at least one of outdoor temperature, wind speed and wind direction, and regulating the operation of the regulating means (35,36,38,39), air treatment means (42a,42b,45a,45b,45c) and/or the pumping means (41,44,63), suction means (41,44,63), blower means (41,44,63) at least partly based on said weather station (49) measurements.

15. A method according to any of the preceding claims 11-14, **characterized in that** the regulations are performed manually or automatically, the method preferably comprising remote control by means of a central control unit (50) of the first airflow and a first air pressure, and/or second airflow and a second air pressure, and/or the regulating means (35,36,38,39).

16. A method according to any of the preceding claims 11-15, **characterized in that** the method comprises the step of connecting the weather station (49), the regulating means (35,36,38,39), the air treatment means (42a,42b,45a,45b,45c) and/or the pumping means (41,44,63), suction means (41,44,63), blower means (41,44,63) to a central data unit (50) for processing the parameters.

17. A method according to claim 16, **characterized in that** said central data unit (50) is a computer performing the steps of
- registering measurements from the weather station (49) and/or the detection means (46,47,48,49),
- calculating an updated operation mode of the regulating means (35,36,38,39), pumping means (41,44,63), suction means (41,44,63), or blower means (41,44,63) and/or the air treatment means (42a,42b,45a,45b,45c) based on said measurements,
- executing the operation mode, and
- transmitting information of the updated mode of operation of any of the regulating means (35,36,38,39), pumping means (41,44,63), suction means (41,44,63), or blower means (41,44,63) and/or the treatment means (42a,42b,45a,45b,45c), and optionally data on measurements from the weather station (49) and/or the detection means (46,47,48,49), and on the operation of the regulating means (35,36,38,39), treatment means (42a,42b,45a,45b,45c) and/or the pumping means (41,44,63), suction means (41,44,63), blower means (41,44,63) to one or more local data units (51).

18. A method according to any of the preceding claims 11-17, **characterized in that** a ventilation volume through the ventilation duct system (1,24,34) is 10 - 60% of the total ventilation volume of the animal habitat structure (25,33,52), preferably 45 - 50% of the total ventilation volume of the stable structure (25,33,52).

19. A method according to any of the preceding claims 17 or 18, **characterized in that** a user interacts with the central data unit (50) via the local data unit (51), said local unit (51) preferably being a PDA, mobile phone and/or portable computer.

20. Use of the method according to any of the preceding claims 11-19 and the system according to any of the preceding claims 1 - 10 for removing ammonia in ambient air in the animal habitat structure (25,33,52) above the animal habitat structure surface (3).

## Patentansprüche

1. Belüftungskanalsystem (1, 24, 34) zur Minimierung der Luftverschmutzung in und/oder um eine Tierhabitatstruktur (25, 33, 52) mit wenigstens einer Tierhabitatfläche (3), wobei das Belüftungskanalsystem (1, 24, 34) ein Abfallaufnahmemittel (2) umfasst, das dazu ausgelegt ist, Abfall (17, 20, 32) aus und/oder durch wenigstens einen Teil der wenigstens einen Tierhabitatfläche (3) aufzunehmen, wobei sich das Belüftungskanalsystem (1, 24, 34) wenigstens zum Teil unter der wenigstens einen Tierhabitatfläche (3) befindet und ein Mittel zum Erzeugen einer Druckdifferenz zwischen einer ersten Längsseite (10) und einer gegenüberliegenden zweiten Längsseite (11) des Abfallaufnahmemittels (2) umfasst, um einen Luftdruckgradienten über die Breite des Abfallaufnahmemittels (2) zu erzeugen, wobei das Belüftungskanalsystem ferner Regulierungsmittel (35, 36, 38, 39) zum Regulieren der natürlichen Belüftung, die sich entfernt von dem Abfallaufnahmemittel (2) befinden, umfasst, und wobei die Regulierungsmittel geeignet sind, einen Luftstrom in der Tierhabitatstruktur (25, 33, 52) zu steuern, **dadurch gekennzeichnet, dass** es Erfassungsmittel umfasst, die sich in oder entfernt von dem Abfallaufnahmemittel befinden, und dass die Erfassungsmittel geeignet sind, die Luftqualität und die physikalischen Bedingungen in mehreren Abschnitten der Tierhabitatstruktur sowie in der unmittelbaren Umgebung zu überwachen, und dass von den Erfassungsmitteln bereitgestellte Messdaten als Eingangsgröße für die Handhabung der Regulierungsmittel verwendet werden.

2. Belüftungskanalsystem (1, 24, 34) nach Anspruch 1, **dadurch gekennzeichnet, dass** das Abfallaufnahmemittel (2) wenigstens eine erste Öffnung (12) in der ersten Längsseite (10) des Abfallaufnahmemittels (2) und wenigstens eine zweite Öffnung (13) in der gegenüberliegenden zweiten Längsseite (11) des Abfallaufnahmemittels (2) umfasst und dass der Luftdruckgradient von der wenigstens einen ersten Öffnung (12) zu der wenigstens einen zweiten Öffnung (13) ermittelt wird.

3. Belüftungskanalsystem (1, 24, 34) nach einem der Ansprüche 1 oder 2, **dadurch gekennzeichnet, dass** das Belüftungskanalsystem (1, 24, 34) ferner einen ersten Luftkanal (7) mit einem ersten Einlassende und einem gegenüberliegenden ersten Auslassende und wenigstens einem ersten Belüftungsloch (14) für eine wenigstens gasförmige Verbindung mit wenigstens dem Abfallaufnahmemittel (2) und einen zweiten Luftkanal (8) mit einem zweiten Einlassende und einem zweiten Auslassende und wenigstens einem zweiten Belüftungsloch (15) für eine wenigstens gasförmige Verbindung mit wenigstens dem Abfallaufnahmemittel (2) umfasst.

4. Belüftungskanalsystem (1, 24, 34) nach Anspruch 3, **dadurch gekennzeichnet, dass** ein erster Luftdruck eines ersten Luftstroms in dem ersten Luftkanal (7) höher als ein zweiter Luftdruck eines zweiten Luftstroms in dem zweiten Luftkanal (8) ist und der zweite Luftdruck niedriger als ein globaler Umgebungsdruck oder niedriger als wenigstens ein lokaler Umgebungsdruck in der Tierhabitatstruktur (25, 33, 52) ist und dass der erste Luftdruck höher als der Luftdruck in dem Abfallaufnahmemittel (2) ist.

5. Belüftungskanalsystem (1, 24, 34) nach einem der vorhergehenden Ansprüche 3 bis 4, **dadurch gekennzeichnet, dass** das Belüftungskanalsystem (1, 24, 34) ferner ein Regulierungsmittel (35, 36, 38, 39) umfasst, das sich in dem ersten Luftkanal (7), dem zweiten Luftkanal (8) und/oder dem Abfallaufnahmemittel (2) befindet.

6. Belüftungskanalsystem (1, 24, 34) nach einem der Ansprüche 1 bis 5, **dadurch gekennzeichnet, dass** die Regulierungsmittel (35, 36, 38, 39) aus der Gruppe ausgewählt sind, die Ventilatoren (38), Luftklappen (35, 36), Schieber, Heizgeräte (39), Kühlgeräte (39), Luftbefeuchter und Luftentfeuchter umfasst.

7. Belüftungskanalsystem (1, 24, 34) nach einem der vorhergehenden Ansprüche 3 bis 6, **dadurch gekennzeichnet, dass** das Belüftungskanalsystem (1, 24, 34) ferner ein Erfassungsmittel (46, 47, 48, 49), das sich in oder entfernt von dem ersten Luftkanal (7), dem zweiten Luftkanal (8) und/oder dem Abfallaufnahmemittel (2) befindet, umfasst, wobei sich wenigstens einige der Erfassungsmittel (46, 47, 48, 49) vorzugsweise außerhalb der Tierhabitatstruktur (25, 33, 52) befinden und/oder die Erfassungsmittel (46, 47, 48, 49) vorzugsweise aus der Gruppe ausgewählt sind, die Temperaturfühler, Feuchtigkeitsfühler, Anemometer, Lichtsensoren, Brandsensoren und/oder Gassensoren umfasst.

8. Belüftungskanalsystem (1, 24, 34) nach Anspruch 7, **dadurch gekennzeichnet, dass** der Luftstrom, der Luftdruck und/oder die Luftqualität in dem ersten (7) und/oder dem zweiten Luftkanal (8) mit Hilfe von wenigstens den Regulierungsmitteln (35, 36, 38, 39), von Pump-, Saug- oder Gebläsemitteln (41, 44, 63) und/oder Luftbehandlungsmitteln (42a, 42b, 45a, 45b, 45c) reguliert werden.

9. Belüftungskanalsystem (1, 24, 34) nach Anspruch 7 oder 8, **dadurch gekennzeichnet, dass** die Erfassungsmittel (46, 47, 48, 49), die Regulierungsmittel (35, 36, 38, 39), die Pumpmittel (41, 44, 63), die Saugmittel (41, 44, 63), die Gebläsemittel (41, 44, 63) und/oder die Luftbehandlungsmittel (42a, 42b, 45a, 45b, 45c) an eine zentrale Dateneinheit (50) gekoppelt sind.

10. Belüftungskanalsystem (1, 24, 34) nach Anspruch 9, **dadurch gekennzeichnet, dass** die zentrale Dateneinheit (50) Folgendes aufweist:
- Mittel zum Aufzeichnen von von den Erfassungsmitteln (46, 47, 48, 49) stammenden Messungen,
- Mittel zum Berechnen der besten Betriebsparameter der Regulierungsmittel (35, 36, 38, 39), Pumpmittel (41, 44, 63), Saugmittel (41, 44, 63), Gebläsemittel (41, 44, 63) und/oder Behandlungsmittel (42a, 42b, 45a, 45b, 45c) basierend auf den Messungen für einen erforderlichen Betriebsmodus,
- Mittel zum Ausführen der Regulierung der Regulierungsmittel (35, 36, 38, 39), Behandlungsmittel (42a, 42b, 45a, 45b, 45c) und/oder der Pumpmittel (41, 44, 63), Saugmittel (41, 44, 63), Gebläsemittel (41, 44, 63) und/oder
- Mittel zum Übermitteln von Daten über Messungen von einer Wetterstation (49) und/oder den Erfassungsmitteln (46, 47, 48, 49) und über den Betrieb der Regulierungsmittel (35, 36, 38, 39), Behandlungsmittel (42a, 42b, 45a, 45b, 45c) und/oder der Pumpmittel (41, 44, 63), Saugmittel (41, 44, 63), Gebläsemittel (41, 44, 63) zu einer oder mehreren lokalen Dateneinheiten (51) .

11. Verfahren zur Minimierung der Luftverschmutzung in und/oder um eine Tierhabitatstruktur (25, 33, 52) mit wenigstens einer Tierhabitatfläche (3) und einem Abfall aufnahmemittel (2), das dazu ausgelegt ist, Abfall (17, 20, 32) aus und/oder durch wenigstens einen Teil der wenigstens einen Tierhabitatfläche (3) aufzunehmen, wobei das Verfahren Folgendes umfasst:
- Bereitstellen eines Belüftungskanalsystems (1, 24, 34) wenigstens zum Teil unter der wenigstens einen Tierhabitatfläche (3),
- Erzeugen einer Druckdifferenz zwischen einer ersten Längsseite (10) und einer gegenüberliegenden zweiten Längsseite (11) des Abfallaufnahmemittels (2), um mit Hilfe des Belüftungskanalsystems (1, 24, 34) einen Luftdruckgradienten über die Breite des Abfallaufnahmemittels (2) zu erzeugen,
- Steuern eines Luftstroms in der Tierhabitatstruktur (25, 33, 52) mit Hilfe von Regulierungsmitteln (35, 36, 38, 39) zum Regulieren der natürlichen Belüftung, die sich entfernt von dem Abfallaufnahmemittel (2) befinden,
- Bereitstellen von Erfassungsmitteln, die sich in oder entfernt von dem Abfallaufnahmemittel befinden,
- Überwachen der Luftqualität und der physikalischen Bedingungen in mehreren Abschnitten der Tierhabitatstruktur sowie in der unmittelbaren Umgebung, und
- Verwenden von Messdaten, die von den Erfassungsmitteln als Eingangsgröße zum Handhaben der Regulierungsmittel bereitgestellt werden.

12. Verfahren nach Anspruch 11, **dadurch gekennzeichnet, dass** das Verfahren ferner das Erzeugen eines ersten Luftstroms und eines ersten Luftdrucks in einem ersten Luftkanal (7) und/oder eines zweiten Luftstroms und eines zweiten Luftdrucks in einem zweiten Luftkanal (8) mit Hilfe der Pumpmittel (41, 44, 63), Saugmittel (41, 44, 63), Gebläsemittel (41, 44, 63) und/oder der Regulierungsmittel (35, 36, 38, 39) umfasst.

13. Verfahren nach Anspruch 11 oder 12, **dadurch gekennzeichnet, dass** das Verfahren ferner Folgendes umfasst:
- Messen wenigstens eines Parameters, der aus der Gruppe ausgewählt ist, die Temperaturen, Luftdrücke, Gaskonzentrationen, lokale Temperaturen, Luftdrücke an einer oder mehreren Stellen umfasst, und
- Regulieren des Betriebs der Regulierungsmittel (35, 36, 38, 39), Luftbehandlungsmittel (42a, 42b, 45a, 45b, 45c), Pumpmittel (41, 44, 63), Saugmittel (41, 44, 63) und/oder Gebläsemittel (41, 44, 63) basierend auf den Messungen und/oder festgelegten Intervallen für wenigstens Umgebungstemperaturen, Luftdrücke, Gaskonzentrationen, lokale Temperaturen, Luftdrücke, Gaskonzentrationen innerhalb und/oder außerhalb der Tierhabitatstruktur.

14. Verfahren nach einem der Ansprüche 11 bis 13, **dadurch gekennzeichnet, dass** das Verfahren ferner das Bereitstellen einer Wetterstation (49) außerhalb der Tierhabitatstruktur (25, 33, 52) zum Messen der Außentemperatur, der Windgeschwindigkeit und/oder der Windrichtung und das Regulieren des Betriebs der Regulierungsmittel (35, 36, 38, 39), Luftbehandlungsmittel (42a, 42b, 45a, 45b, 45c) und/oder der Pumpmittel (41, 44, 63), Saugmittel (41, 44, 63), Gebläsemittel (41, 44, 63) wenigstens zum Teil basierend auf den Messungen der Wetterstation (49) umfasst.

15. Verfahren nach einem der vorhergehenden Ansprüche 11 bis 14, **dadurch gekennzeichnet, dass** die Regulierungen manuell oder automatisch durchgeführt werden, wobei das Verfahren vorzugsweise eine mit Hilfe einer zentralen Steuereinheit (50) erfolgenden Fernsteuerung des ersten Luftstroms und eines ersten Luftdrucks und/oder des zweiten Luftstroms und eines zweiten Luftdrucks und/oder der Regulierungsmittel (35, 36, 38, 39) umfasst.

16. Verfahren nach einem der vorhergehenden Ansprüche 11 bis 15, **dadurch gekennzeichnet, dass** das Verfahren den Schritt des Verbindens der Wetterstation (49), der Regulierungsmittel (35, 36, 38, 39), der Luftbehandlungsmittel (42a, 42b, 45a, 45b, 45c) und/oder der Pumpmittel (41, 44, 63), Saugmittel (41, 44, 63), Gebläsemittel (41, 44, 63) mit einer zentralen Dateneinheit (50) zum Verarbeiten der Parameter umfasst.

17. Verfahren nach Anspruch 16, **dadurch gekennzeichnet, dass** die zentrale Dateneinheit (50) ein Computer ist, der die folgenden Schritte durchführt:
- Aufzeichnen von von der Wetterstation (49) und/oder den Erfassungsmitteln (46, 47, 48, 49) stammenden Messungen,
- Berechnen eines aktualisierten Betriebsmodus der Regulierungsmittel (35, 36, 38, 39), Pumpmittel (41, 44, 63), Saugmittel (41, 44, 63) oder Gebläsemittel (41, 44, 63) und/oder der Luftbehandlungsmittel (42a, 42b, 45a, 45b, 45c) basierend auf den Messungen,
- Ausführen des Betriebsmodus und
- Übertragen von Informationen über den aktualisierten Betriebsmodus von einem beliebigen der Regulierungsmittel (35, 36, 38, 39), Pumpmittel (41, 44, 63), Saugmittel (41, 44, 63) oder Gebläsemittel (41, 44, 63) und/oder der Behandlungsmittel (42a, 42b, 45a, 45b, 45c) und optional von Daten über von der Wetterstation (49) und/oder den Erfassungsmitteln (41, 44, 63) stammenden Messungen und über den Betrieb der Regulierungsmittel (35, 36, 38, 39), Behandlungsmittel (42a, 42b, 45a, 45b, 45c) und/oder der Pumpmittel (41, 44, 63), Saugmittel (41, 44, 63), Gebläsemittel (41, 44, 63) an eine oder mehrere lokale Dateneinheiten (51).

18. Verfahren nach einem der vorhergehenden Ansprüche 11 bis 17, **dadurch gekennzeichnet, dass** ein Belüftungsvolumen durch das Belüftungskanalsystem (1, 24, 34) 10% bis 60% des Gesamtbelüftungsvolumens der Tierhabitatstruktur (25, 33, 52), vorzugsweise 45% bis 50% des Gesamtbelüftungsvolumens der Stallstruktur (25, 33, 52) beträgt.

19. Verfahren nach einem der vorhergehenden Ansprüche 17 oder 18, **dadurch gekennzeichnet, dass** ein Benutzer mit der zentralen Dateneinheit (50) über die lokale Dateneinheit (51), wobei die lokale Einheit (51) vorzugsweise ein PDA, ein Mobiltelefon und/oder ein tragbarer Computer ist, interagiert.

20. Anwendung des Verfahrens nach einem der vorhergehenden Ansprüche 11 bis 19 und des Systems nach einem der vorhergehenden Ansprüche 1 bis 10 zum Entfernen von Ammoniak in der Umgebungsluft in der Tierhabitatstruktur (25, 33, 52) über der Tierhabitatstrukturfläche (3).

## Revendications

1. Système (1, 24, 34) de conduits de ventilation pour réduire au minimum la pollution de l'air dans et/ou autour d'une structure (25, 33, 52) d'habitat animal ayant au moins une surface (3) d'habitat animal, ledit système (1, 24, 34) de conduits de ventilation comprenant des moyens (2) de réception des déchets configurés pour recevoir des déchets (17, 20, 32) de et/ou par au moins une partie de ladite surface (3) d'habitat animal, où le système (1, 24, 34) de conduits de ventilation est situé au moins en partie au-dessous de ladite surface (3) d'habitat animal et comprend des moyens pour créer une différence de pression entre un premier côté long (10) et un second côté long (11) opposé des moyens (2) de réception des déchets pour créer un gradient de pression d'air d'un côté à l'autre de la largeur des moyens (2) de réception des déchets, où le système de conduits de ventilation comprend en outre des moyens de régulation (35, 36, 38, 39) pour réguler la ventilation naturelle située à l'écart des moyens (2) de réception des déchets, et lesdits moyens de régulation étant aptes à commander le flux d'air dans la structure (25, 33, 52) d'habitat animal,
**caractérisé en ce qu'**il comprend des moyens de détection situés dans ou à l'écart des moyens de réception des déchets, **en ce que** lesdits moyens de détection sont aptes à surveiller la qualité de l'air et les conditions physiques dans de multiples sections de la structure d'habitat animal ainsi que dans les environs immédiats et **en ce que** les données de mesure fournies par les moyens de détection sont utilisées en tant qu'entrées pour gérer les moyens de régulation.

2. Système (1, 24, 34) de conduits de ventilation selon la revendication 1, **caractérisé en ce que** les moyens (2) de réception des déchets comprennent au moins une première ouverture (12) dans le premier côté long (10) des moyens (2) de réception des déchets et au moins une seconde ouverture (13) dans le second côté long (11) opposé des moyens (2) de réception des déchets, et **en ce que** le gradient de pression d'air s'établit de ladite première ouverture (12) à ladite seconde ouverture (13) .

3. Système (1, 24, 34) de conduits de ventilation selon la revendication 1 ou 2, **caractérisé en ce que** le système (1, 24, 34) de conduits de ventilation comprend en outre un premier conduit d'air (7) ayant une première extrémité d'entrée et une première extrémité de sortie opposée et au moins un premier trou de ventilation (14) pour une communication au moins gazeuse avec les moyens (2) de réception des déchets, et un second conduit d'air (8) ayant une seconde extrémité d'entrée et une seconde extrémité de sortie opposée et au moins un second trou de ventilation (15) pour une communication au moins gazeuse avec les moyens (2) de réception des déchets.

4. Système (1, 24, 34) de conduits de ventilation selon la revendication 3, **caractérisé en ce que** la première pression d'air d'une première circulation d'air dans le premier conduit d'air (7) est supérieure à la seconde pression d'air d'une seconde circulation d'air dans le second conduit d'air (8) et la seconde pression d'air est inférieure à la pression ambiante globale ou inférieure à au moins une pression ambiante locale dans la structure (25, 33, 52) d'habitat animal, et **en ce que** la première pression d'air est supérieure à la pression d'air dans les moyens (2) de réception des déchets.

5. Système (1, 24, 34) de conduits de ventilation selon la revendication 3 ou 4, **caractérisé en ce que** le système (1, 24, 34) de conduits de ventilation comprend en outre un moyen de régulation (35, 36, 38, 39) situé dans le premier conduit d'air (7), le second conduit d'air (8) et/ou les moyens (2) de réception des déchets.

6. Système (1, 24, 34) de conduits de ventilation selon l'une quelconque des revendications 1 à 5, **caractérisé en ce que** les moyens de régulation (35, 36, 38, 39) sont choisis dans le groupe constitué des ventilateurs (38), des registres (35, 36), des grilles, des réchauffeurs (39), des refroidisseurs (39), des humidificateurs et des déshumidificateurs.

7. Système (1, 24, 34) de conduits de ventilation selon l'une quelconque des revendications 3 à 6, **caractérisé en ce que** le système (1, 24, 34) de conduits de ventilation comprend en outre un moyen de détection (46, 47, 48, 49) situé dans le premier conduit d'air (7), le second conduit d'air (8) et/ou les moyens (2) de réception des déchets ou à l'écart de ceux-ci, au moins certains des moyens de détection (46, 47, 48, 49) étant de préférence situés en dehors de la structure (25, 33, 52) d'habitat animal, et/ou lesdits moyens de détection (46, 47, 48, 49) étant de préférence choisis dans le groupe comprenant sondes de température, capteurs d'humidité, anémomètres, capteurs optiques, détecteurs d'incendie et/ou capteurs de gaz.

8. Système (1, 24, 34) de conduits de ventilation selon la revendication 7, **caractérisé en ce que** le débit d'air, la pression d'air et/ou la qualité de l'air dans le premier (7) et/ou le second (8) conduit d'air sont régulés à l'aide d'au moins les moyens de régulation (35, 36, 38, 39), des moyens (41, 44, 63) de pompage, d'aspiration ou de soufflage et/ou des moyens (42a, 42b, 45a, 45b, 45c) de traitement de l'air.

9. Système (1, 24, 34) de conduits de ventilation selon la revendication 7 ou 8, **caractérisé en ce que** les moyens de détection (46, 47, 48, 49), les moyens de régulation (35, 36, 38, 39), les moyens de pompage (41, 44, 63), les moyens d'aspiration (41, 44, 63), les moyens de soufflerie (41, 44, 63) et/ou les moyens (42a, 42b, 45a, 45b, 45c) de traitement de l'air sont couplés à une unité centrale (50) de données.

10. Système (1, 24, 34) de conduits de ventilation selon la revendication 9, **caractérisé en ce que** l'unité centrale (50) de données comporte :
- des moyens pour enregistrer les mesures provenant des moyens de détection (46, 47, 48, 49),
- des moyens pour calculer les meilleurs paramètres de fonctionnement des moyens de régulation (35, 36, 38, 39), les moyens de pompage (41, 44, 63), les moyens d'aspiration (41, 44, 63), les moyens de soufflerie (41, 44, 63) et/ou les moyens (42a, 42b, 45a, 45b, 45c) de traitement de l'air sur la base desdites mesures pour un mode de fonctionnement requis,
- des moyens pour exécuter le réglage des moyens de régulation (35, 36, 38, 39), des moyens de traitement (42a, 42b, 45a, 45b, 45c) et/ou des moyens de pompage (41, 44, 63), des moyens d'aspiration (41, 44, 63), des moyens de soufflerie (41, 44, 63), et/ou
- des moyens pour communiquer des données sur des mesures provenant d'une station météorologique (49) et/ou des moyens de détection (46, 47, 48, 49), et sur le fonctionnement des moyens de régulation (35, 36, 38, 39), des moyens de traitement (42a, 42b, 45a, 45b, 45c) et/ou des moyens de pompage (41, 44, 63), des moyens d'aspiration (41, 44, 63), des moyens de soufflerie (41, 44, 63) à une ou plusieurs unités locales (51) de données.

11. Procédé pour réduire au minimum la pollution de l'air dans et/ou autour d'une structure (25, 33, 52) d'habitat animal ayant au moins une surface (3) d'habitat animal et des moyens (2) de réception des déchets configurés pour recevoir des déchets (17, 20, 32) de et/ou par au moins une partie de ladite surface (3) d'habitat animal, le procédé comprenant les opérations consistant à :
- faire appel à un système (1, 24, 34) de conduits de ventilation au moins partiellement au-dessous de ladite surface (3) d'habitat animal,
- créer une différence de pression entre un premier côté long (10) et un second côté long (11) opposé des moyens (2) de réception des déchets pour créer un gradient de pression d'air d'un côté à l'autre de la largeur des moyens (2) de réception des déchets à l'aide du système (1, 24, 34) de conduits de ventilation,
- commander le débit d'air dans la structure (25, 33, 52) d'habitat animal à l'aide des moyens de régulation (35, 36, 38, 39) pour réguler la ventilation naturelle située à l'écart des moyens (2) de réception des déchets,
- faire appel à des moyens de détection situés dans ou à l'écart des moyens de réception des déchets,
- surveiller la qualité de l'air et les conditions physiques dans de multiples sections de la structure d'habitat animal ainsi que dans les environs immédiats, et
- utiliser les données de mesure fournies par les moyens de détection sont utilisées en tant qu'entrées pour gérer les moyens de régulation.

12. Procédé selon la revendication 11, **caractérisé en ce que** le procédé comprend en outre l'opération consistant à créer un premier débit d'air et une première pression d'air dans un premier conduit d'air (7) et/ou un second débit d'air et une seconde pression d'air dans un second conduit d'air (8) à l'aide des moyens de pompage (41, 44, 63), des moyens d'aspiration (41, 44, 63), des moyens de soufflerie (41, 44, 63) et/ou des moyens de régulation (35, 36, 38, 39).

13. Procédé selon la revendication 11 ou 12, **caractérisé en ce que** le procédé comprend en outre les opérations consistant à :
- mesurer au moins un paramètre choisi dans le groupe comprenant températures, pressions d'air, concentrations en gaz, températures locales, pressions d'air en un ou plusieurs emplacements, et
- régler le fonctionnement des moyens de régulation (35, 36, 38, 39), des moyens (42a, 42b, 45a, 45b, 45c) de traitement d'air et/ou des moyens de pompage (41, 44, 63), des moyens d'aspiration (41, 44, 63), des moyens de soufflerie (41, 44, 63) sur la base desdites mesures et/ou des intervalles définis pour au moins les températures ambiantes, les pressions d'air, les concentrations en gaz, les températures locales, les pressions d'air, les concentrations en gaz à l'extérieur et/ou à l'intérieur de la structure d'habitat animal.

14. Procédé selon l'une quelconque des revendications 11 à 13, **caractérisé en ce que** le procédé comprend en outre les opérations consistant à faire appel à une station météorologique (49) à l'extérieur de la structure (25, 33, 52) d'habitat animal pour mesurer au moins une donnée parmi température extérieure, vitesse du vent et direction du vent, et régler le fonctionnement des moyens de régulation (35, 36, 38, 39), des moyens (42a, 42b, 45a, 45b, 45c) de traitement d'air et/ou des moyens de pompage (41, 44, 63), des moyens d'aspiration (41, 44, 63), des moyens de soufflerie (41, 44, 63) au moins en partie sur la base des mesures de ladite station météorologique (49).

15. Procédé selon l'une quelconque des revendications 11 à 14, **caractérisé en ce que** les réglages sont exécutés manuellement ou automatiquement, le procédé comprenant de préférence une commande à distance, à l'aide d'une unité centrale (50) de commande, du premier débit d'air et de la première pression d'air et/ou du second débit d'air et de la seconde pression d'air et/ou des moyens de régulation (35, 36, 38, 39).

16. Procédé selon l'une quelconque des revendications 11 à 15, **caractérisé en ce que** le procédé comprend l'étape consistant à raccorder la station météorologique (49), les moyens de régulation (35, 36, 38, 39), les moyens (42a, 42b, 45a, 45b, 45c) de traitement d'air et/ou les moyens de pompage (41, 44, 63), les moyens d'aspiration (41, 44, 63), les moyens de soufflerie (41, 44, 63) à une unité centrale (50) de données pour traiter les paramètres.

17. Procédé selon la revendication 16, **caractérisé en ce que** ladite unité centrale (50) de données est un ordinateur exécutant les étapes consistant à :
- enregistrer les mesures provenant de la station météorologique (49) et/ou des moyens de détection (46, 47, 48, 49),
- calculer un mode de fonctionnement actualisé des moyens de régulation (35, 36, 38, 39), des moyens de pompage (41, 44, 63), des moyens d'aspiration (41, 44, 63), ou des moyens de soufflerie (41, 44, 63) et/ou des moyens (42a, 42b, 45a, 45b, 45c) de traitement de l'air sur la base desdites mesures,
- exécuter le mode de fonctionnement, et
- transmettre les informations sur le mode de fonctionnement actualisé des moyens de régulation (35, 36, 38, 39), des moyens de pompage (41, 44, 63), des moyens d'aspiration (41, 44, 63), ou des moyens de soufflerie (41, 44, 63) et/ou des moyens (42a, 42b, 45a, 45b, 45c) de traitement, et éventuellement des données sur des mesures provenant d'une station météorologique (49) et/ou des moyens de détection (46, 47, 48, 49), et sur le fonctionnement des moyens de régulation (35, 36, 38, 39), des moyens de traitement (42a, 42b, 45a, 45b, 45c) et/ou des moyens de pompage (41, 44, 63), des moyens d'aspiration (41, 44, 63), des moyens de soufflerie (41, 44, 63) à une ou plusieurs unités locales (51) de données.

18. Procédé selon l'une quelconque des revendications 11 à 17, **caractérisé en ce qu'**un volume de ventilation à travers le système (1, 24, 34) de conduits de ventilation représente 10 à 60 % du volume total de ventilation de la structure (25, 33, 52) d'habitat animal, de préférence 45 à 50 % du volume total de ventilation de la structure (25, 33, 52) d'étable.

19. Procédé selon la revendication 17 ou 18, **caractérisé en ce qu'**un utilisateur interagit avec l'unité centrale (50) de données via l'unité locale (51) de données, ladite unité locale (51) étant de préférence un ANP, un téléphone mobile et/ou un ordinateur portable.

20. Utilisation du procédé selon l'une quelconque des revendications 11 à 19 et du système selon l'une quelconque des revendications 1 à 10 pour éliminer l'ammoniac dans l'air ambiant dans la structure (25, 33, 52) d'habitat animal au-dessus de la surface (3) de la structure d'habitat animal.
